(19) Europäisches Patentamt
European Patent Office
Office européen des brevets

(11) **EP 4 013 170 A1**

(12) **EUROPEAN PATENT APPLICATION**
published in accordance with Art. 153(4) EPC

(43) Date of publication:
**15.06.2022 Bulletin 2022/24**

(21) Application number: **20859428.3**

(22) Date of filing: **28.07.2020**

(51) International Patent Classification (IPC):
***H04W 72/12*** *(2009.01)*

(52) Cooperative Patent Classification (CPC):
**H04W 72/12; H04W 74/08**

(86) International application number:
**PCT/CN2020/105193**

(87) International publication number:
**WO 2021/036648 (04.03.2021 Gazette 2021/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.08.2019 CN 201910785807**

(71) Applicant: **Huawei Technologies Co., Ltd.
Longgang District
Shenzhen,
Guangdong 518129 (CN)**

(72) Inventors:
• **YU, Jian**
  **Shenzhen, Guangdong 518129 (CN)**
• **LI, Yunbo**
  **Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(54) **DATA TRANSMISSION METHOD AND DEVICE**

(57)  This application discloses a data transmission method and apparatus, and relates to the field of communication technologies. The method includes: A transmit end generates transmission suspension indication information, where the transmission suspension indication information is used to indicate whether transmission suspension occurs at a designated location after the transmission suspension indication information; and sends a PPDU, where the PPDU includes a preamble and a data field, and the data field carries the transmission suspension indication information. In this application, the transmission suspension indication information is carried in the data field of the PPDU, where the information is used to indicate whether transmission suspension occurs at the designated location after the information, so that a receive end can determine, based on the transmission suspension indication information, whether transmission suspension occurs at the designated location, to suspend transmission of the PPDU at the designated location, thereby improving data transmission flexibility.

FIG. 6

## Description

This application claims priority to Chinese Patent Application No. 201910785807.3, filed on August 23, 2019, and entitled "DATA TRANSMISSION METHOD AND APPARATUS", which is incorporated herein by reference in its entirety.

## TECHNICAL FIELD

This application relates to the field of communication technologies, and in particular, to a data transmission method and apparatus.

## BACKGROUND

Each network device in a wireless transmission system obtains a transmission opportunity in a contention manner. For example, a network device in a wireless local area network (wireless local area network, WLAN) contends for a channel through a rollback mechanism, and after the channel is obtained through contention, transmits a physical layer protocol data unit (Physical Layer Protocol Data Unit, PPDU) on the channel. The PPDU includes a preamble (preamble) and a data field (data field). The data field is used to carry a medium access control (medium access control, MAC) protocol data unit (MAC Protocol Data Unit, MPDU) (also referred to as a MAC frame). The MAC frame includes data, control signaling, management signaling, and the like.

Currently, in some data transmission processes, in a process of transmitting a current first PPDU, the network device can transmit a second PPDU only after transmission of the first PPDU is completed. Therefore, a transmission latency of the second PPDU is relatively long, and data transmission flexibility thereof is relatively low.

## SUMMARY

Embodiments of this application provide a data transmission method and apparatus, to resolve a problem of relatively low data transmission flexibility in the related technology. The technical solutions are as follows:

Embodiments of this application provide a data transmission method and apparatus, to resolve a problem of relatively low data transmission flexibility in the related technology. The technical solutions are as follows:

According to a first aspect, a data transmission method is provided. The method is used for a transmit end and includes: generating transmission suspension indication information, where the transmission suspension indication information is used to indicate whether transmission suspension occurs at a designated location after the transmission suspension indication information; and sending a physical layer protocol data unit PPDU, where the PPDU includes a preamble and a data field, and the data field carries the transmission suspension indication information.

In the data transmission method provided in this embodiment of this application, the suspension indication information indicates whether transmission suspension occurs at the designated location after the transmission suspension indication information, so that when the transmit end needs to stop transmission of the current PPDU, the transmit end can notify, by using the transmission suspension indication information, a receive end that transmission of the current PPDU is suspended at the designated location, or a receive end can determine, based on the transmission suspension indication information, that transmission suspension occurs at the designated location, thereby improving data transmission flexibility.

According to a second aspect, a data transmission method is provided. The method is used for a receive end and includes: receiving a PPDU, where the PPDU includes a preamble and a data field, the data field carries transmission suspension indication information, and the transmission suspension indication information is used to indicate whether transmission suspension occurs at a designated location after the transmission suspension indication information; and parsing the PPDU based on the transmission suspension indication information.

In a first possible implementation of the first aspect and the second aspect, in a first example, a transmission suspension subfield is set every M symbols in the data field, M is a positive integer, and M represents a designated quantity of intervals; and
the designated location is a location in the transmission suspension subfield.

In a second example, if the transmission suspension indication information indicating that transmission suspension occurs is located between $M \times (K-1) +1$ symbols and $M \times K$ symbols, a field in which N symbols after the $M \times K$ symbols are located and that is in the data field is a transmission suspension subfield, M, N, and K are positive integers, and M represents a designated quantity of intervals; and
the designated location is a location in the transmission suspension subfield.

In a third example, if the transmission suspension indication information indicating that transmission suspension occurs is located between $M \times (K-1) +1$ symbols and $M \times K$ symbols, the designated location is an end location of the

$M \times K$ symbols, and M and K are positive integers.

In a second possible implementation of the first aspect and the second aspect, the designated location is a start location of a first transmission suspension subfield after the transmission suspension indication information.

In a third possible implementation of the first aspect and the second aspect, the preamble includes first quantity indication information, and the first quantity indication information is used to indicate the designated quantity of intervals.

In a fourth possible implementation of the first aspect and the second aspect, the preamble carries field indication information, and the field indication information is used to indicate that the PPDU includes the transmission suspension subfield.

In a fifth possible implementation of the first aspect and the second aspect, the field indication information is located in a Doppler field of the preamble.

In a sixth possible implementation of the first aspect and the second aspect, for the first example of the first possible implementation, the transmission suspension subfield is a midamble subfield.

Alternatively, for the second example of the first possible implementation, the transmission suspension subfield is a subfield inserted into the data field or an original subfield in the data field.

In a seventh possible implementation of the first aspect and the second aspect, the midamble subfield includes P extremely high throughput long training field EHT-LTF symbols, P is a positive integer, and a length of the EHT-LTF symbol of the midamble subfield is smaller than a length of an EHT-LTF symbol of the preamble; or the midamble includes a designated symbol, and a length of the designated symbol is smaller than a length of another symbol in the data field.

In an eighth possible implementation of the first aspect and the second aspect, the midamble subfield further includes an extremely high throughput short training field EHT-STF.

In a ninth possible implementation of the first aspect and the second aspect, the preamble includes second quantity indication information, and the second quantity indication information is used to indicate a quantity of EHT-LTF symbols included in the midamble subfield.

In a tenth possible implementation of the first aspect and the second aspect, the preamble carries suspension warning information, and the suspension warning information is used to indicate whether there is a possibility of transmission suspension. If the suspension warning information indicates that there is a possibility of transmission suspension, the receive end is always ready to stop receiving a currently transmitted PPDU at any time; if the suspension warning information indicates that there is no possibility of transmission suspension, the receive end receives the currently transmitted PPDU according to an existing WLAN protocol.

In an eleventh possible implementation of the first aspect and the second aspect, the suspension warning information is located in an extremely high throughput signal EHT-SIG field of the preamble.

In a twelfth possible implementation of the first aspect and the second aspect, the transmission suspension indication information is preemption indication information, and the preemption indication information is used to indicate whether a preemption mechanism occurs at the designated location; or
the transmission suspension indication information is quiet period indication information, the quiet period indication information is used to indicate whether a quiet period is generated at a designated location after the quiet period indication information, and the quiet period is a transmission suspension period of the PPDU.

In a thirteenth possible implementation of the first aspect and the second aspect, the preamble includes a legacy signal L-SIG field, and if transmission suspension occurs, actual transmission duration of the PPDU is less than originally-defined transmission duration indicated by the L-SIG field. In other words, when transmission suspension occurs, the actual transmission duration of the PPDU is less than the originally-defined transmission duration indicated by the L-SIG field.

That transmission suspension occurs means that the transmit end suspends sending of a current frame. The actual transmission duration of the PPDU is less than the originally-defined transmission duration indicated by the L-SIG field. In other words, a quantity of actually transmitted A-MPDU subframes in the PPDU is less than a quantity of A-MPDU subframes that are originally defined to be transmitted and that are in the PPDU.

In a fourteenth possible implementation of the first aspect and the second aspect, that transmission suspension occurs at the designated location may be indicated to the receive end by using a MAC method, that is, that transmission suspension occurs at the designated location is indicated to the receive end in a MAC frame structure; and/or that transmission suspension occurs at the designated location may be indicated to the receive end by using a physical method, that is, that transmission suspension occurs at the designated location is indicated to the receive end in a physical layer structure. A manner in which the PPDU indicates that transmission suspension occurs at the designated location is described from two aspects in the following embodiments of this application.

According to one aspect, the data field includes at least one aggregated medium access control protocol data unit A-MPDU subframe, and each of the at least one A-MPDU subframe carries the transmission suspension indication information.

In a first optional manner, if transmission suspension occurs, transmission suspension indication information carried in any A-MPDU subframe or a designated A-MPDU subframe in the at least one A-MPDU subframe indicates that transmission suspension occurs at the designated location.

In a second optional manner, if transmission suspension occurs, transmission suspension indication information carried in each A-MPDU subframe that is from a moment at which it is determined that transmission suspension occurs to the transmission suspension subfield in which the designated location is located and that is in the at least one A-MPDU subframe indicates that transmission suspension occurs at the designated location.

In a third optional manner, the data field includes a plurality of A-MPDU subframes, and if transmission suspension occurs, transmission suspension indication information carried in at least two of the plurality of A-MPDU subframes indicates that transmission suspension occurs at the designated location.

According to the other aspect, the data field includes a plurality of symbols, and if transmission suspension occurs, transmission suspension indication information of the data field is a specific physical layer pattern symbol in the plurality of symbols.

In a fifteenth possible implementation of the first aspect and the second aspect, the A-MPDU subframe includes an MPDU delimiter and an MPDU, the MPDU delimiter includes at least one of the following fields: an end of frame field, a reserved bit field, an MPDU length field, a cyclic redundancy code field, and a delimiter signature field, the MPDU includes at least one of the following fields: a frame header, a frame body, and a frame check sequence, and the transmission suspension indication information is located in at least one of the following fields: the end of frame field, the reserved bit field, the MPDU length field, the cyclic redundancy code field, the delimiter signature field, a high throughput control field of the frame header, and the frame check sequence.

In a sixteenth possible implementation of the first aspect and the second aspect, in a first possible implementation, the transmission suspension indication information is located in the reserved bit field. If the reserved bit field is a first value, it represents that transmission suspension occurs at the designated location. If the reserved bit field is a second value, it represents that transmission suspension does not occur at the designated location. The second value is different from the first value.

In a second possible implementation, the transmission suspension indication information is located in the CRC field. If the CRC field includes first-type CRC, it represents that transmission suspension occurs at the designated location. If the CRC field includes second-type CRC, it represents that transmission suspension does not occur at the designated location. The second-type CRC is different from the first-type CRC.

In a third possible implementation, the transmission suspension indication information is located in the delimiter signature field. If the delimiter signature field includes a first-type delimiter signature symbol, it represents that transmission suspension occurs at the designated location. If the delimiter signature field includes a second-type delimiter signature symbol, it represents that transmission suspension does not occur at the designated location. The second-type delimiter signature symbol is different from the first-type delimiter signature symbol.

In a fourth possible implementation, the transmission suspension indication information is located in the EOF field and the MPDU length field. If the EOF field is set to 1, and the MPDU length field is set to 0, it indicates that EOF padding appears, and it represents that transmission suspension occurs at the designated location.

In a fifth possible implementation, the transmission suspension indication information is located in the frame check sequence, if the frame check sequence includes a first-type sequence, it represents that transmission suspension occurs at the designated location; and if the frame check sequence includes a second-type sequence, it represents that transmission suspension does not occur at the designated location. The second-type sequence is different from the first-type sequence.

Optionally, the first-type sequence is obtained by performing at least one of an exclusive OR operation and a flip operation on the second-type sequence.

In a sixth possible implementation, the transmission suspension indication information includes at least one piece of indication information in the high throughput control field, and the at least one piece of indication information includes at least one of a control identifier, a transmission suspension type, a quantity of padding symbols, a transmission resumption time, and whether acknowledgment information needs to be returned.

According to a third aspect, a data transmission method is provided. The method is used for a transmit end and includes: generating transmission suspension indication information, where the transmission suspension indication information is used to indicate that transmission suspension occurs at a designated location after the transmission suspension indication information; and sending a physical layer protocol data unit PPDU, where the PPDU includes a preamble and a data field, and the data field carries the transmission suspension indication information.

In the data transmission method provided in this embodiment of this application, the suspension indication information indicates that transmission suspension occurs at the designated location after the transmission suspension indication information, so that when the transmit end needs to stop transmission of the current PPDU, the transmit end can notify, by using the transmission suspension indication information, a receive end that transmission of the current PPDU is suspended at the designated location, or a receive end can determine, based on the transmission suspension indication information, that transmission suspension occurs at the designated location, thereby improving data trans-

mission flexibility.

According to a fourth aspect, a data transmission method is provided. The method is used for a receive end and includes: receiving a PPDU, where the PPDU includes a preamble and a data field, the data field carries transmission suspension indication information, and the transmission suspension indication information is used to indicate that transmission suspension occurs at a designated location after the transmission suspension indication information; and parsing the PPDU based on the transmission suspension indication information.

In a first possible implementation of the third aspect and the fourth aspect, in a first example, a transmission suspension subfield is set every M symbols in the data field, M is a positive integer, and M represents a designated quantity of intervals; and

the designated location is a location in the transmission suspension subfield.

In a second example, if the transmission suspension indication information indicating that transmission suspension occurs is located between $M\times(K-1)+1$ symbols and $M\times K$ symbols, a field in which N symbols after the $M\times K$ symbols are located and that is in the data field is a transmission suspension subfield, M, N, and K are positive integers, and M represents a designated quantity of intervals; and

the designated location is a location in the transmission suspension subfield.

In a third example, if the transmission suspension indication information indicating that transmission suspension occurs is located between $M\times(K-1)+1$ symbols and $M\times K$ symbols, the designated location is an end location of the $M\times K$ symbols, and M and K are positive integers.

In a second possible implementation of the third aspect and the fourth aspect, the designated location is a start location of a first transmission suspension subfield after the transmission suspension indication information.

In a third possible implementation of the third aspect and the fourth aspect, the preamble includes first quantity indication information, and the first quantity indication information is used to indicate the designated quantity of intervals.

In a fourth possible implementation of the third aspect and the fourth aspect, the preamble carries field indication information, and the field indication information is used to indicate that the PPDU includes the transmission suspension subfield.

In a fifth possible implementation of the third aspect and the fourth aspect, the field indication information is located in a Doppler field of the preamble.

In a sixth possible implementation of the third aspect and the fourth aspect, for the first example of the first possible implementation, the transmission suspension subfield is a midamble subfield.

Alternatively, for the second example of the first possible implementation, the transmission suspension subfield is a subfield inserted into the data field or an original subfield in the data field.

In a seventh possible implementation of the third aspect and the fourth aspect, the midamble subfield includes P extremely high throughput long training field EHT-LTF symbols, P is a positive integer, and a length of the EHT-LTF symbol of the midamble subfield is smaller than a length of an EHT-LTF symbol of the preamble; or the midamble includes a designated symbol, and a length of the designated symbol is smaller than a length of another symbol in the data field.

In an eighth possible implementation of the third aspect and the fourth aspect, the midamble subfield further includes an extremely high throughput short training field EHT-STF.

In a ninth possible implementation of the third aspect and the fourth aspect, the preamble includes second quantity indication information, and the second quantity indication information is used to indicate a quantity of EHT-LTF symbols included in the midamble subfield.

In a tenth possible implementation of the third aspect and the fourth aspect, the preamble carries suspension warning information, and the suspension warning information is used to indicate whether there is a possibility of transmission suspension. If the suspension warning information indicates that there is a possibility of transmission suspension, the receive end is always ready to stop receiving a currently transmitted PPDU at any time; if the suspension warning information indicates that there is no possibility of transmission suspension, the receive end receives the currently transmitted PPDU according to an existing WLAN protocol.

In an eleventh possible implementation of the third aspect and the fourth aspect, the suspension warning information is located in an extremely high throughput signal EHT-SIG field of the preamble.

In a twelfth possible implementation of the third aspect and the fourth aspect, the transmission suspension indication information is preemption indication information, and the preemption indication information is used to indicate whether a preemption mechanism occurs at the designated location; or the transmission suspension indication information is quiet period indication information, the quiet period indication information is used to indicate whether a quiet period is generated at a designated location after the quiet period indication information, and the quiet period is a transmission suspension period of the PPDU.

In a thirteenth possible implementation of the third aspect and the fourth aspect, the preamble includes a legacy signal L-SIG field; and actual transmission duration of the PPDU is less than originally-defined transmission duration indicated by the L-SIG field. In other words, when transmission suspension occurs, the actual transmission duration of the PPDU is less than the originally-defined transmission duration indicated by the L-SIG field.

That transmission suspension occurs means that the transmit end suspends sending of a current frame. The actual transmission duration of the PPDU is less than the originally-defined transmission duration indicated by the L-SIG field. In other words, a quantity of actually transmitted A-MPDU subframes in the PPDU is less than a quantity of A-MPDU subframes that are originally defined to be transmitted and that are in the PPDU.

In a fourteenth possible implementation of the third aspect and the fourth aspect, that transmission suspension occurs at the designated location may be indicated to the receive end by using a MAC method, that is, that transmission suspension occurs at the designated location is indicated to the receive end in a MAC frame structure; and/or that transmission suspension occurs at the designated location may be indicated to the receive end by using a physical method, that is, that transmission suspension occurs at the designated location is indicated to the receive end in a physical layer structure. A manner in which the PPDU indicates that transmission suspension occurs at the designated location is described from two aspects in the following embodiments of this application.

According to one aspect, the data field includes at least one aggregated medium access control protocol data unit A-MPDU subframe, and each of the at least one A-MPDU subframe carries the transmission suspension indication information.

In a first optional manner, transmission suspension indication information carried in any A-MPDU subframe or a designated A-MPDU subframe in the at least one A-MPDU subframe indicates that transmission suspension occurs at the designated location.

In a second optional manner, transmission suspension indication information carried in each A-MPDU subframe that is from a moment at which it is determined that transmission suspension occurs to the transmission suspension subfield in which the designated location is located and that is in the at least one A-MPDU subframe indicates that transmission suspension occurs at the designated location.

In a third optional manner, the data field includes a plurality of A-MPDU subframes, and transmission suspension indication information carried in at least two of the plurality of A-MPDU subframes indicates that transmission suspension occurs at the designated location.

According to the other aspect, the data field includes a plurality of symbols, and transmission suspension indication information of the data field is a specific physical layer pattern symbol in the plurality of symbols.

In a fifteenth possible implementation of the third aspect and the fourth aspect, the A-MPDU subframe includes an MPDU delimiter and an MPDU, the MPDU delimiter includes at least one of the following fields: an end of frame field, a reserved bit field, an MPDU length field, a cyclic redundancy code field, and a delimiter signature field, the MPDU includes at least one of the following fields: a frame header, a frame body, and a frame check sequence, and the transmission suspension indication information is located in at least one of the following fields: the end of frame field, the reserved bit field, the MPDU length field, the cyclic redundancy code field, the delimiter signature field, a high throughput control field of the frame header, and the frame check sequence.

According to a fifth aspect, a data transmission apparatus is provided, and is used for a transmit end. The data transmission apparatus has a function of implementing behavior in the data transmission method in the first aspect. The data transmission apparatus includes at least one module, and the at least one module is configured to implement the data transmission method provided in the first aspect or the third aspect.

According to a sixth aspect, a data transmission apparatus is provided, and is used for a receive end. The data transmission apparatus has a function of implementing behavior in the data transmission method in the second aspect. The data transmission apparatus includes at least one module, and the at least one module is configured to implement the data transmission method provided in the second aspect or the fourth aspect.

According to a seventh aspect, a data transmission apparatus is provided, and is used for a transmit end, including a memory and a processor. The memory is coupled to the processor. The memory is configured to store a computer program, where the computer program includes program instructions. The processor is configured to invoke the program instructions, to implement the data transmission method according to either the first aspect or the third aspect.

According to an eighth aspect, a data transmission apparatus is provided and is used for a receive end, including a memory and a processor. The memory is coupled to the processor. The memory is configured to store a computer program, where the computer program includes program instructions. The processor is configured to invoke the program instructions, to implement the data transmission method according to either the second aspect or the fourth aspect.

According to a ninth aspect, a computer-readable storage medium is provided. The computer-readable storage medium stores a computer program, where the computer program includes at least one segment of code. The at least one segment of code may be executed by a computer, to control the computer to perform the data transmission method according to any one of the first aspect to the fourth aspect.

According to a tenth aspect, a computer program is provided. When the computer program is executed by a computer, the computer program is used to perform the data transmission method according to any one of the first aspect to the fourth aspect.

Optionally, all or a part of the computer program may be stored in a storage medium that is packaged together with a processor, or may be stored in a memory that is not packaged together with a processor.

According to an eleventh aspect, a processor is provided, where the processor includes:

at least one circuit, configured to generate preemption indication information or parse a PPDU; and
at least one circuit, configured to send and receive the PPDU.

Optionally, the processor may be a chip.

According to a twelfth aspect, a chip is provided, including a processor. The processor is configured to invoke instructions stored in the memory and run the instructions, to enable a communication device on which the chip is installed to perform the methods in the foregoing aspects.

According to a thirteenth aspect, an embodiment of this application further provides another chip. The chip may be a part of a receive end or a transmit end. The chip includes an input interface, an output interface, and a circuit. The input interface, the output interface, and the circuit are connected to each other through an internal connection path. The circuit is configured to perform the methods in the foregoing examples.

According to a fourteenth aspect, another chip is provided. The chip includes an input interface, an output interface, and a processor. Optionally, the chip further includes a memory. The input interface, the output interface, the processor, and the memory are connected to each other through an internal connection path. The processor is configured to execute code in the memory, and when the code is executed, the processor is configured to perform the methods in the foregoing aspects.

According to a fifteenth aspect, an apparatus is provided, and is configured to implement the methods in the foregoing aspects.

According to a sixteenth aspect, a data transmission system is provided, including a transmit end and at least one receive end. The transmit end includes the data transmission apparatus according to the fifth aspect, and the receive end includes the data transmission apparatus according to the sixth aspect.

According to the technical solutions provided in this application, in the data transmission method provided in this embodiment of this application, the suspension indication information indicates whether transmission suspension occurs at the designated location after the transmission suspension indication information, so that when the transmit end needs to stop transmission of the current PPDU, the transmit end can notify, by using the transmission suspension indication information, the receive end that transmission of the current PPDU is suspended at the designated location, or the receive end can determine, based on the transmission suspension indication information, that transmission suspension occurs at the designated location, thereby improving data transmission flexibility.

In a scenario in which the preemption mechanism exists, when the transmit end needs to stop transmission of the current PPDU, the transmit end can notify, by using the preemption indication information, the receive end that transmission of the current PPDU is suspended at the designated location, thereby improving data transmission flexibility. In a process in which a transmit end transmits a PPDU, when the transmit end needs to transmit a data frame with a relatively high service priority, transmission of the current PPDU can be suspended, and the data frame with a relatively high service priority can be transmitted in a timely manner. Therefore, a transmission latency of the data frame with a relatively high service priority can be reduced. Further, reliability of the data transmission system is improved, and a throughput of the data transmission system is improved.

In addition, the preemption indication information used to indicate whether the preemption mechanism occurs is carried in each A-MPDU subframe, so that whether the preemption mechanism occurs at the designated location can be explicitly indicated to the receive end.

In a scenario in which a quiet period mechanism exists, when the transmit end needs to stop transmission of the current PPDU, the transmit end can notify, by using the quiet period indication information, the receive end that the current PPDU generates the quiet period at the designated location, thereby improving data transmission flexibility. In a process in which the transmit end transmits a PPDU, when the transmit end needs to execute another service, the transmit end can suspend transmission of the current PPDU and execute the another service in the quiet period in a timely manner, thereby ensuring fast execution of the another service. Further, reliability of the data transmission system is improved, and a throughput of the data transmission system is improved.

**BRIEF DESCRIPTION OF DRAWINGS**

FIG. 1 is a schematic diagram of a structure of a data transmission system according to an embodiment of this application;
FIG. 2 is a schematic diagram of a frame structure of an MPDU according to an embodiment of this application;
FIG. 3 is a schematic diagram of a structure of an A-MPDU according to an embodiment of this application;

FIG. 4 is a schematic diagram of a structure of an MPDU delimiter according to an embodiment of this application;

FIG. 5 is a schematic diagram of a structure of a PPDU according to an embodiment of this application;

FIG. 6 is a flowchart of a data transmission method according to an embodiment of this application;

FIG. 7 is a schematic diagram of a structure of a PPDU according to an embodiment of this application;

FIG. 8 is a schematic diagram of a structure of another PPDU according to an embodiment of this application;

FIG. 9 is a schematic diagram of a structure of still another PPDU according to an embodiment of this application;

FIG. 10 is a schematic diagram of a structure of a PPDU according to another embodiment of this application;

FIG. 11 is a schematic diagram of a structure of another PPDU according to another embodiment of this application;

FIG. 12 is a schematic diagram of a structure of still another PPDU according to another embodiment of this application;

FIG. 13 is a schematic diagram of a structure of yet another PPDU according to another embodiment of this application;

FIG. 14 is a schematic diagram of a structure of a PPDU according to still another embodiment of this application;

FIG. 15 is a schematic diagram of a structure of another PPDU according to still another embodiment of this application;

FIG. 16 is a schematic diagram of a structure of still another PPDU according to still another embodiment of this application;

FIG. 17 is a schematic diagram of a structure of yet another PPDU according to still another embodiment of this application;

FIG. 18 is a schematic diagram of a structure of a PPDU according to yet another embodiment of this application;

FIG. 19 is a flowchart of another data transmission method according to yet another embodiment of this application;

FIG. 20 is a schematic diagram of a structure of still another PPDU according to yet another embodiment of this application;

FIG. 21 is a flowchart of another data transmission method according to an embodiment of this application;

FIG. 22 is a schematic diagram of data transmission in a preemption mechanism according to an embodiment of this application;

FIG. 23 is a schematic diagram of data transmission in a preemption transmission mode according to an embodiment of this application;

FIG. 24 is a schematic diagram of data transmission in another preemption transmission mode according to an embodiment of this application;

FIG. 25 is a flowchart of still another data transmission method according to an embodiment of this application;

FIG. 26 to FIG. 28 are schematic diagrams of structures of several other PPDUs according to an embodiment of this application;

FIG. 29 is a schematic diagram of a structure of a data transmission apparatus according to an embodiment of this application;

FIG. 30 is a schematic diagram of a structure of another data transmission apparatus according to an embodiment of this application;

FIG. 31 is a schematic diagram of a structure of a data transmission apparatus according to another embodiment of this application;

FIG. 32 is a schematic diagram of a structure of another data transmission apparatus according to another embodiment of this application;

FIG. 33 is a block diagram of a data transmission apparatus according to an embodiment of this application; and

FIG. 34 is a block diagram of another data transmission apparatus according to an embodiment of this application.

**DESCRIPTION OF EMBODIMENTS**

To make objectives, technical solutions, and advantages of this application clearer, the following further describes implementations of this application in detail with reference to accompanying drawings.

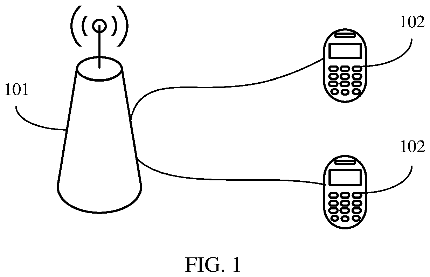

FIG. 1 is a schematic diagram of a structure of a data transmission system according to an embodiment of this application. As shown in FIG. 1, the data transmission system includes at least one transmit end 101 and at least one receive end 102. The transmit end 101 and the receive end 102 may communicate with each other by using a wireless network. Refer to FIG. 1. An example in which the data transmission system includes one transmit end 101 and two receive ends 102 is used for description in this embodiment of this application.

Optionally, the data transmission system provided in this embodiment of this application may be a wireless communication system, for example, a wireless local area network (wireless LAN, WLAN). The wireless communication system may support a plurality of WLAN communication protocols, for example, the Institute of Electrical and Electronics Engineers (Institute of Electrical and Electronics Engineers, IEEE) 802.11ax protocol, and a next-generation protocol 802.11be or a next-next-generation protocol of the IEEE 802.11ax protocol. For ease of description, the WLAN is used as an example for description in this embodiment of this application. The WLAN may include a plurality of basic service sets (Basic Service Set, BSS). Nodes in the basic service set include an access point (access point, AP) station and a non-access point station (None access point station, Non-AP STA). The access point station is usually referred to as an access point for short, that is, an AP, and a non-access point station is usually referred to as a station for short, that is, a STA. Each basic service set may include one AP and a plurality of STAs associated with the AP. The access point is an apparatus having a wireless transceiver function, and may provide a service for the station. The station is an apparatus having a wireless transceiver function, and may access the wireless local area network based on the access point.

The AP may also be referred to as a wireless access point, a hotspot, or the like. The AP is an access point used by a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge connecting a wired network and a wireless network. Main functions of the AP are to connect STAs together and then connect the wireless network to the wired network. Optionally, the AP may be a terminal device or a network device with a wireless fidelity (wireless fidelity, Wi-Fi) chip. For example, the AP may be a communication server, a router, a switch, or a bridge.

Optionally, the STA may be a wireless communication chip, a wireless sensor, or a wireless communication terminal. For example, the STA may be a mobile phone, a tablet computer, a set-top box, a smart television set, a smart wearable device, an in-vehicle communication device, a computer, or the like that supports a Wi-Fi communication function.

Optionally, in this embodiment of this application, the transmit end 101 may be an AP, and the receive end 102 may be a STA. Alternatively, the transmit end 101 may be an AP, and the receive end 102 may also be an AP. Alternatively, the transmit end 101 may be a STA, and the receive end 102 may also be a STA. An example in which the transmit end 101 is an AP and the receive ends 102 are both STAs is used for description in this embodiment of this application.

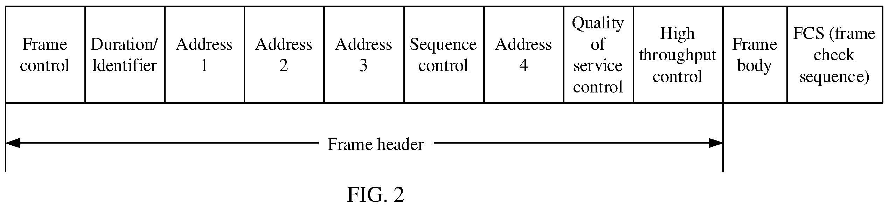

In the WLAN, data, control signaling, management signaling, or the like is transmitted between the AP and the STA by using an MPDU. The MPDU generally includes a frame header, a frame body (Frame Body), and a frame check sequence (Frame Check Sequence, FCS). The frame body is used to carry data, management information, or control information, where the data, the management information, or the control information is transmitted from an upper layer. For some specific types of MPDUs, for example, an acknowledgment frame, the frame body may not exist. The FCS is used to check whether the MPDU is correctly transmitted. The frame header may include at least one of the following fields: a frame control (Frame Control) field, a duration or identifier (Duration/ID) field, an address information field, a sequence control (Sequence Control) field, a quality of service control (Quality of Service Control, QoS Control) field, and a high throughput control (High Throughput Control, HT Control) field. For explanations of the fields, refer to the IEEE802.11 protocol. Details are not described herein in this embodiment of this application. For example, FIG. 2 is a schematic diagram of a frame structure of an MPDU according to an embodiment of this application. As shown in FIG. 2, a frame header includes a frame control field, a duration/identifier (duration or identifier) field, an address information field (for example, an address 1, an address 2, an address 3, and an address 4), a sequence control field, a quality of service control field, and a high throughput control field. It should be noted that, FIG. 2 is merely used as an example to describe the frame structure of the MPDU. Content included in the frame header of the MPDU and an arrangement sequence of the fields are not limited in this embodiment of this application.

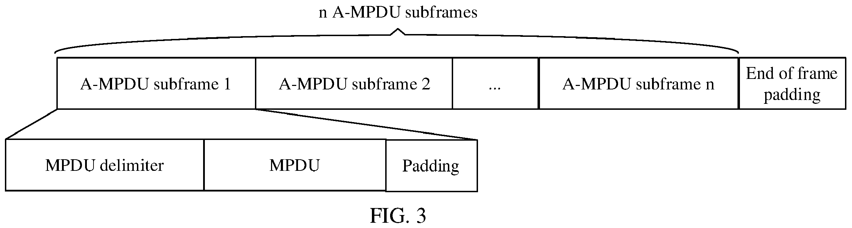

To improve WLAN performance, currently, a frame aggregation technology is used at a MAC layer to aggregate a plurality of MPDUs into one aggregated MPDU (Aggregated MPDU, A-MPDU). Because all MPDUs in a same A-MPDU are transmitted by using a PPDU, overheads of a PPDU preamble and overheads for contending a channel can be reduced, and transmission efficiency can be improved. FIG. 3 is a schematic diagram of a structure of an A-MPDU in the IEEE 802.11 standard. As shown in FIG. 3, the A-MPDU includes n A-MPDU subframes, where n is an integer greater than or equal to 1. Optionally, refer to FIG. 3. The A-MPDU may further include an end of frame (end of frame, EOF) padding (pad) field located after the n A-MPDU subframes. Still refer to FIG. 3. Each A-MPDU subframe includes an MPDU delimiter (delimiter) and an MPDU. Optionally, the A-MPDU subframe may further include a padding field. The MPDU delimiter is used to separate a plurality of aggregated MPDUs.

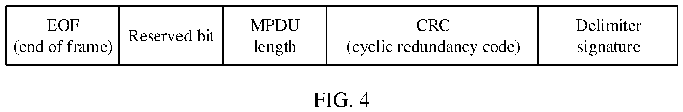

Optionally, the MPDU delimiter includes at least one of the following fields: an EOF field, a reserved (reserved) bit field, an MPDU length (MPDU length) field, a cyclic redundancy code (Cyclic Redundancy Code, CRC) field, and a delimiter signature (delimiter signature) field. An EOF is usually used to indicate whether the MPDU is a last MPDU in the A-MPDU. An MPDU length is used to indicate a quantity of bytes of an MPDU following a current MPDU delimiter, that is, the MPDU length is used to indicate a quantity of bytes of an MPDU in a current A-MPDU subframe. A delimiter signature is a characteristic sequence (an ASCII value of the characteristic sequence is 'N'), and is used by a receive end to search for a delimiter. Even if the receive end decodes a delimiter or an MPDU incorrectly, the receive end can still search for a next delimiter signature to find a next MPDU, so as to prevent a phenomenon of error spreading. CRC, similar to an FCS, is used by the receive end to check whether an error occurs in a delimiter. A sliding window may be further determined based on a length of the MPDU delimiter. After a CRC check succeeds, a next MPDU delimiter is searched for by using the sliding window. The length of the MPDU delimiter is 4 bytes. For example, FIG. 4 is a schematic diagram of a structure of an MPDU delimiter according to an embodiment of this application. As shown in FIG. 4, the MPDU delimiter includes an EOF field, a reserved bit field, an MPDU length field, a CRC field, and a delimiter signature field. It should be noted that, FIG. 4 is merely used as an example to describe a structure of the MPDU delimiter. Content included in the MPDU delimiter and an arrangement sequence of the fields are not limited in this embodiment of this application.

It should be noted that, an A-MPDU is carried in a data field of a PPDU for transmission. Currently, in some data transmission processes, transmission of a PPDU needs to be suspended. For example, in a data transmission method based on a preemption mechanism, in a process of sending the PPDU, a transmit end internally receives an indication of stopping transmission of the current PPDU and sends, to a receive end, indication signaling indicating that transmission of the PPDU is to be stopped, and the receive end learns, through the indication signaling, that transmission of the PPDU is to be stopped, and stops receiving the PPDU.

However, in an existing process of transmitting a current first PPDU, a network device can transmit a second PPDU only after transmission of the first PPDU is completed. Therefore, a transmission latency of the second PPDU is relatively long, and data transmission flexibility is relatively low. Especially, when a priority of the second PPDU is higher than that of the first PPDU, a PPDU with a high priority has relatively low transmission flexibility.

In addition, if transmission of the first PPDU is suspended so that transmission of the second PPDU is performed, because transmission of a currently transmitted PPDU may be stopped at any time, a requirement on processing latencies at the transmit end and the receive end is relatively high, and transmission flexibility is relatively low.

A data transmission method provided in this application is an improvement based on the IEEE 802.11 standard. In the transmission method, in a process in which a transmit end transmits a PPDU, if transmission suspension occurs, the transmit end may suspend transmission of an A-MPDU, and after transmission suspension ends, then continues to transmit the A-MPDU. That transmission suspension occurs means that in a process in which the transmit end transmits a PPDU, transmission of the PPDU is suspended. That transmission suspension does not occur means that the transmit end normally transmits the PPDU. In this embodiment of this application, whether transmission suspension occurs at a designated location after transmission suspension indication information is indicated by using the transmission suspension indication information. The information not only is used to indicate whether transmission suspension occurs but also is used to indicate the designated location at which transmission suspension occurs if transmission suspension occurs. Therefore, content indication on two aspects can be implemented. Whether transmission suspension occurs at the designated location is used to indicate whether the transmit end suspends transmission of the current PPDU at the designated location. In this embodiment of this application, if transmission suspension occurs, transmission suspension occurs at the designated location and does not occur at another location. If transmission suspension does not occur, transmission suspension does not occur at the designated location and does not occur at another location, either. Therefore, in this embodiment of this application, that transmission suspension occurs may be equivalent to that transmission suspension occurs at the designated location, and that transmission suspension does not occur may be equivalent to that transmission suspension does not occur at the designated location.

In this embodiment of this application, actual transmission suspension may occur only at the designated location, and a receive end may prepare to stop receiving a currently transmitted PPDU only at the designated location, reducing preparation work and preparation duration of the receive end for transmission suspension.

It should be noted that, there is a data packet length indication in a preamble of the PPDU. For example, in a legacy signal (legacy signal, L-SIG) field of the preamble, there are a length (length) subfield and a rate (rate) subfield. The transmit end indirectly indicates originally-defined transmission duration of the PPDU by using the length subfield and the rate subfield in the L-SIG field. The rate subfield is fixedly set to 6 megabits per second (Megabits per second, Mbps). Because the rate subfield is set to a fixed value, the originally-defined transmission duration of the PPDU is indirectly indicated by using the length subfield. A formula for calculating a length of the length subfield is as follows:

$$\text{Length} = \left\lceil \frac{\text{TXTIME-SignalExtension-20}}{4} \right\rceil \times 3 - 3 - m .$$

SignalExtension (signal extension) is a parameter related to a transmission frequency band. When the AP works in 2.4 GHz, the parameter is 6 $\mu$s (microsecond). When the AP works in 5 GHz, the parameter is 0 $\mu$s. TXTIME represents the originally-defined transmission duration of the entire PPDU. A value of m may be 0, 1, or 2. This depends on a specific PPDU type. Details are not described herein in this embodiment of this application.

When transmission suspension occurs at the designated location, actual transmission duration of the PPDU is less than duration (that is, the originally-defined transmission duration) of TXTIME corresponding to Length in the L-SIG field. Correspondingly, the receive end calculates receiving duration by using the length subfield in the L-SIG field:

$$RXTIME = \left\lceil \frac{Length+3}{3} \right\rceil \times 4 + 20 + SignalExtension$$

.

Similarly, when transmission suspension occurs at the designated location, the actual transmission duration of the PPDU received by the receive end is less than duration (that is, the originally-defined transmission duration) of RXTIME obtained through calculation by using Length. It should be noted that, RXTIME and TXTIME that are calculated by using the Length field may be slightly different because of an actual symbol length and the like.

It can be learned from the foregoing content that when transmission suspension occurs at the designated location, the actual transmission duration of the PPDU is less than the originally-defined transmission duration indicated by the L-SIG field. It may alternatively be understood that the PPDU is originally defined to be used to transmit n A-MPDU subframes. If transmission suspension occurs in a transmission process, m A-MPDU subframes are actually transmitted in the PPDU, where n and m are both positive integers, and m<n.

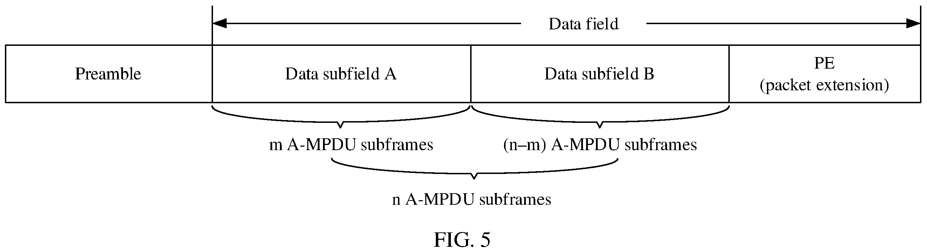

For example, FIG. 5 is a schematic diagram of a structure of a PPDU according to an embodiment of this application. As shown in FIG. 5, the PPDU includes a preamble and a data field, and the preamble is used to assist in receiving the data field. The data field includes a data subfield A and a data subfield B. The data subfield A includes m A-MPDU subframes, and the data subfield B includes (n-m) A-MPDU subframes. Optionally, the data field further includes a packet extension (packet extension, PE) field located after n A-MPDU subframes. For example, if transmission suspension occurs, and a location at which suspension actually occurs is an end location (or a start location of the data subfield B) of the data subfield A, the m A-MPDU subframes in the data subfield A are actually transmitted in the PPDU, and the (n-m) A-MPDU subframes in the data subfield B and the PE subfield are not actually transmitted.

It should be noted that in this embodiment of this application, the A-MPDU subframe is used as a minimum transmission unit of transmission suspension. It is assumed that after transmission suspension occurs, the m A-MPDU subframes in the n A-MPDU subframes that are originally defined to be transmitted and that are in the PPDU are sent, and the (n-m) A-MPDU subframes are not sent. Because it is stipulated in the IEEE 802.11 standard that each MPDU has an explicit sequence number index, fragment information indication does not need to be additionally performed on the unsent (n-m) A-MPDUs, and the unsent (n-m) A-MPDUs do not need to correspond to the sent m A-MPDU subframes, and only need to be carried in a new PPDU and then continue to be transmitted.

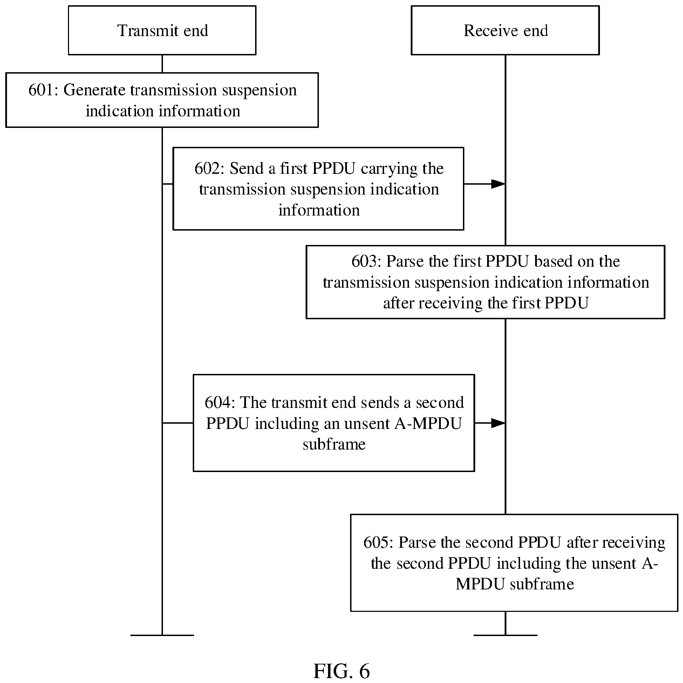

FIG. 6 is a flowchart of a data transmission method according to an embodiment of this application. The data transmission method may be used in the data transmission system shown in FIG. 1. As shown in FIG. 6, assuming that a PPDU that is being currently transmitted is a first PPDU, the method includes the following steps.

Step 601: A transmit end generates transmission suspension indication information.

In an optional embodiment of this application, the transmission suspension indication information is used to indicate whether transmission suspension occurs at a designated location after the transmission suspension indication information.

In another optional embodiment of this application, the transmission suspension indication information is used to indicate that transmission suspension occurs at a designated location after the transmission suspension indication information.

Step 602: The transmit end sends the first PPDU carrying the transmission suspension indication information.

The first PPDU includes a preamble and a data field. The data field carries the transmission suspension indication information.

Step 603: A receive end parses the first PPDU based on the transmission suspension indication information after receiving the first PPDU.

Optionally, after completing parsing of the received first PPDU, the receive end may generate acknowledgment information, and return the acknowledgment information to the transmit end.

The transmission suspension indication information is generated in real time in a process in which the transmit end performs data transmission. If the transmit end internally receives an indication of stopping transmission of a current PPDU (that is, the first PPDU), the transmission suspension indication information in step 601 indicates that transmission suspension occurs at the designated location after the transmission suspension indication information. When arriving at the designated location, the transmit end suspends transmission of the first PPDU. Correspondingly, if the transmit end does not internally receive an indication of stopping transmission of the current PPDU, the transmit end continues to perform normal transmission of the current PPDU, for example, transmit the current PPDU according to an existing WLAN protocol.

Further, if transmission suspension (the transmission suspension is transmission suspension of the first PPDU) occurs, the data transmission method further includes the following steps.

Step 604: The transmit end sends a second PPDU including an unsent A-MPDU subframe.

For example, when arriving at the designated location, the transmit end suspends transmission of the first PPDU. Correspondingly, the receive end determines, based on the transmission suspension indication information, that transmission of the first PPDU is suspended at the designated location. After transmission suspension ends, the transmit end sends the second PPDU including the unsent A-MPDU subframe.

It can be learned based on the IEEE 802.11 standard that fragment information indication does not need to be additionally performed on the unsent A-MPDU, and the unsent A-MPDU does not need to correspond to a sent A-MPDU subframe and only needs to be carried in a new PPDU and then continues to be transmitted. In this embodiment of this application, it is assumed that the new PPDU is the second PPDU. The unsent A-MPDU subframe is an A-MPDU subframe that originally needs to be sent but is not sent in the first PPDU.

In an optional manner, a physical layer service data unit (PHY Service Data Unit, PSDU) that is still not transmitted, that is, data (whose unit is bit) obtained after an A-MPDU subframe that is previously still not transmitted in the first PPDU is encoded, may be directly transmitted. In other words, the unsent A-MPDU subframe included in the second PPDU is an encoded A-MPDU subframe that originally needs to be sent but is not sent in the first PPDU. In this case, the preamble of the second PPDU may include transmission indication information, and the transmission indication information indicates that the A-MPDU subframe in the second PPDU is continued transmission of the PSDU that is previously still not transmitted. The transmission indication information may be carried in a signaling field of the second PPDU. The signaling field may be an L-SIG, an EHT-SIG-A, or an EHT-SIG-B.

In another optional manner, code modulation is performed again on the A-MPDU subframe that is still not transmitted to obtain the encoded A-MPDU subframe, and the second PPDU carrying the encoded A-MPDU subframe is transmitted. In other words, the unsent A-MPDU subframe included in the second PPDU is data obtained after the A-MPDU subframe that is not sent in the first PPDU is recoded.

Step 605: The receive end parses the second PPDU after receiving the second PPDU including the unsent A-MPDU subframe.

Optionally, the receive end may generate acknowledgment information of the second PPDU after completing parsing of the second PPDU including the unsent A-MPDU subframe, and return the acknowledgment information to the transmit end.

Using the structure of the PPDU in FIG. 5 as an example, it is assumed that transmission suspension is performed at the end location of the data subfield A, the actually transmitted first PPDU in the foregoing step includes the m A-MPDU subframes in the data subfield A, and the actually transmitted second PPDU includes the (n-m) A-MPDU subframes in the data subfield B and the PE subfield, that is, the unsent A-MPDUs included in the second PPDU are the (n-m) A-MPDU subframes and the PE subfield. A part of data in the data field of the PPDU in FIG. 5 is separately actually transmitted in the first PPDU and the second PPDU.

It should be noted that in the actually transmitted data field, an A-MPDU subframe may be located in two data subfields. For example, a first half is located in the data subfield A, and a second half is located in the data subfield B. In this embodiment of this application, an example in which each data subfield includes an integer quantity of A-MPDUs is used for description, but this is not limited in this embodiment of this application.

Optionally, after suspending transmission of the first PPDU at the designated location, the transmit end may further send at least one of a padding symbol and a PE subfield to the receive end. The padding symbol and the PE subfield are both used to assist the receive end in increasing a processing time. In other words, when transmission suspension occurs, the first PPDU actually transmitted by the transmit end to the transmit end includes the padding symbol and/or the PE subfield located after the designated location, to increase the processing time of the receive end. Still using FIG. 5 as an example, after transmitting the m A-MPDU subframes in the data subfield A, the transmit end may further send at least one of the padding symbol and the PE subfield to the receive end.

In the data transmission method provided in this embodiment of this application, the suspension indication information indicates whether transmission suspension occurs at the designated location after the transmission suspension indication information, so that when the transmit end needs to stop transmission of the current PPDU, the transmit end can notify, by using the transmission suspension indication information, the receive end that transmission of the current PPDU is suspended at the designated location, or the receive end can determine, based on the transmission suspension indication information, that transmission suspension occurs at the designated location, thereby improving data transmission flexibility. In addition, because the designated location is a location after the transmission suspension indication information for a period of time, a relatively adequate preparation time of a transmission suspension action is reserved for the transmit end and the receive end, increasing feasibility of transmission suspension.

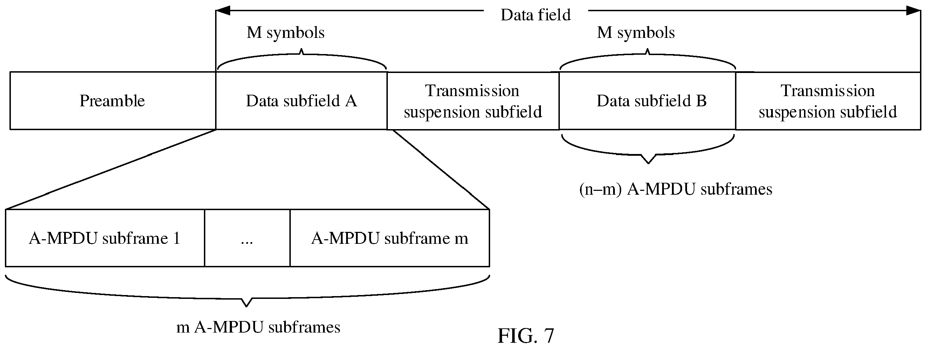

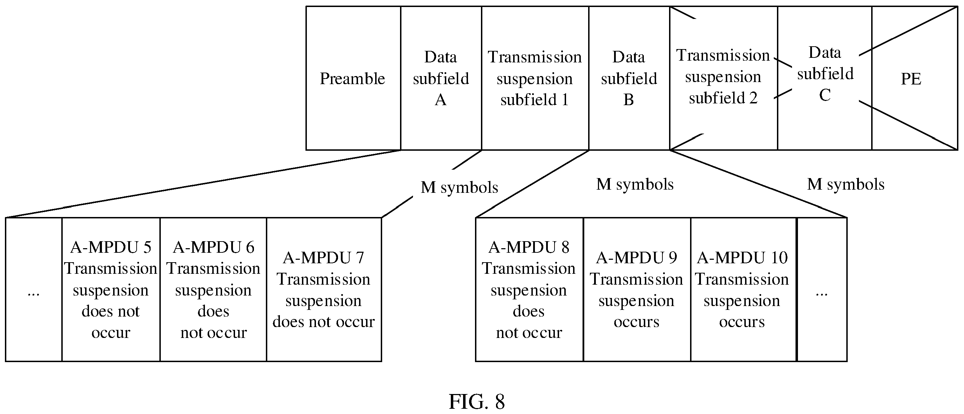

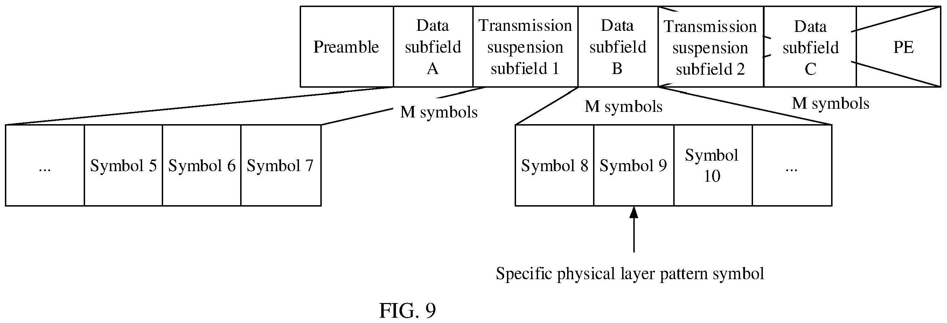

In this embodiment of this application, that transmission suspension occurs at the designated location may be indicated to the receive end by using a MAC method, that is, that transmission suspension occurs at the designated location is indicated to the receive end in a MAC frame structure; and/or that transmission suspension occurs at the designated location may be indicated to the receive end by using a physical method, that is, that transmission suspension occurs at the designated location is indicated to the receive end in a physical layer structure. A manner of indicating that transmission suspension occurs at the designated location is described in detail by using two different structures of the PPDU in the following embodiments of this application. PPDUs shown in FIG. 7 and FIG. 8 both correspond to the MAC method, and a PPDU shown in FIG. 9 corresponds to a physical method. For ease of description, relevant signaling information used to indicate that transmission suspension occurs at the designated location in this embodiment of this application is collectively referred to as the transmission suspension indication information.

It should be noted that in the data transmission method provided in this embodiment of this application, in a scenario in which transmission suspension exists, there are a plurality of implementations for construction principles of the PPDU, the construction principles of the PPDU are described by using the following three optional implementations as an example in this embodiment of this application.

In a first optional implementation of this embodiment of this application, as shown in FIG. 7 to FIG. 11, a transmission suspension subfield is set every M symbols in a data field, and a designated location is a location in the transmission suspension subfield, that is, belongs to the transmission suspension subfield. M is a positive integer, and M represents a designated quantity of intervals. Optionally, the symbol is an OFDM symbol. One or more of transmission suspension subfields may be set in the PPDU through this structural setting. When the PPDU includes the plurality of transmission suspension subfields, the transmission suspension subfield can periodically appear in the data field. The transmission suspension subfields are uniformly distributed, ensuring that once transmission suspension is generated, the designated location located after the transmission suspension indication information may be quickly indicated by using the information.

FIG. 7 is a schematic diagram of a structure of another PPDU according to an embodiment of this application. In the PPDU shown in FIG. 7, the data field includes at least one A-MPDU subframe, and each A-MPDU subframe of the data field carries transmission suspension indication information. Refer to the content in FIG. 5 for another structure in FIG. 7. Details are not described herein again in this embodiment of this application.

FIG. 8 is a schematic diagram of a structure of still another PPDU according to an embodiment of this application. As shown in FIG. 8, it is assumed that the data field that is originally defined to be transmitted and that is in the PPDU includes data of 3M symbols and a PE subfield located after the data of the 3M symbols. First M symbols in the 3M symbols are located in a data subfield A, middle M symbols are located in a data subfield B, and last M symbols are located in a data subfield C. A transmission suspension subfield, that is, a transmission suspension subfield 1 and a transmission suspension subfield 2 in FIG. 8, is set between every two data subfields. The M symbols in the data subfield A and the M symbols in the data subfield B are actually transmitted symbols in the PPDU, and the M symbols in the data subfield C and the PE subfield located after the M symbols are not actually transmitted.

The data subfields A, B, and C each include one or more A-MPDU subframes. Each A-MPDU subframe carries transmission suspension indication information.

Optionally, refer to FIG. 3 and FIG. 4 for a structure of each A-MPDU subframe in FIG. 7 and FIG. 8. The transmission suspension indication information is located in at least one of the following fields: an EOF field, a reserved bit field, an MPDU length field, a CRC field, a delimiter signature field, a high throughput control field of a frame header, and an FCS.

In a first possible implementation, the transmission suspension indication information is located in the reserved bit field. If the reserved bit field is a first value, it represents that transmission suspension occurs at a designated location. If the reserved bit field is a second value, it represents that transmission suspension does not occur at the designated location. The second value is different from the first value. For example, when the reserved bit field is 1, it indicates that transmission suspension occurs at the designated location. When the reserved bit field is 0, it indicates that transmission suspension does not occur at the designated location.

Whether transmission suspension occurs at the designated location is indicated by using a value of the reserved bit field, and a new field does not need to be added, to ensure data transmission compatibility.

In a second possible implementation, the transmission suspension indication information is located in the CRC field. If the CRC field includes first-type CRC, it represents that transmission suspension occurs at the designated location. If the CRC field includes second-type CRC, it represents that transmission suspension does not occur at the designated location. The second-type CRC is different from the first-type CRC.

Optionally, the first-type CRC is obtained by performing at least one of an exclusive OR operation and a flip operation on the second-type CRC, or a type of the first-type CRC is different from a type of the second-type CRC. For example, when CRC is generated by performing a modulo 2 operation by using a polynomial $x^8 + x^2 + x^1 + 1$ according to the existing IEEE 802.11-2016 standard, it indicates that transmission suspension does not occur at the designated location. When an additional exclusive OR operation is performed on the CRC, for example, an exclusive OR operation is performed on an 8-bit CRC and 00001111, to generate an xCRC, or a different polynomial is used to generate an xCRC, it indicates that transmission suspension occurs at the designated location.

Whether transmission suspension occurs at the designated location is indicated by carrying different content in the CRC field, and a new field does not need to be added. The receive end can determine, by parsing content in the CRC field, whether transmission suspension occurs at the designated location, and a new amount of computation does not need to be added, thereby ensuring data transmission efficiency while ensuring data transmission compatibility.

In a third possible implementation, the transmission suspension indication information is located in the delimiter signature field. If the delimiter signature field includes a first-type delimiter signature symbol, it represents that transmission suspension occurs at the designated location. If the delimiter signature field includes a second-type delimiter signature symbol, it represents that transmission suspension does not occur at the designated location. The second-type delimiter signature symbol is different from the first-type delimiter signature symbol. For example, when the delimiter signature field includes an ASCII code 'N', it indicates that transmission suspension does not occur at the designated location. When the delimiter signature field includes another ASCII code, for example, an ASCII code "Y", it indicates that transmission suspension occurs at the designated location.

Whether transmission suspension occurs at the designated location is indicated by carrying different content in the delimiter signature field, and a new field does not need to be added. The receive end can determine, by parsing content in the delimiter signature field, whether transmission suspension occurs at the designated location, and a new amount of computation does not need to be added, thereby ensuring data transmission efficiency while ensuring data transmission compatibility.

In a fourth possible implementation, the transmission suspension indication information is located in the EOF field and the MPDU length field. If the EOF field is set to 1, and the MPDU length field is set to 0, it indicates that EOF padding appears, and it represents that transmission suspension occurs at the designated location.

In a fifth possible implementation, the transmission suspension indication information is located in the FCS. If the FCS includes a first-type sequence, it represents that transmission suspension occurs at the designated location. If the FCS includes a second-type sequence, it represents that transmission suspension does not occur at the designated location. The second-type sequence is different from the first-type sequence. Optionally, the first-type sequence is obtained by performing at least one of an exclusive OR operation and a flip operation on the second-type sequence, or a type of the first-type sequence is different from a type of the second-type sequence.

Whether transmission suspension occurs at the designated location is indicated by using different types of the FCS, and a new field does not need to be added. The receive end can determine, by parsing the FCS, whether transmission suspension occurs at the designated location, and a new amount of computation does not need to be added, thereby ensuring data transmission efficiency while ensuring data transmission compatibility.

In a sixth possible implementation, the transmission suspension indication information includes at least one piece of indication information in the high throughput control field, and the at least one piece of indication information includes at least one of a control identifier, a transmission suspension type, a quantity of padding symbols, a transmission resumption time, and whether acknowledgment information needs to be returned.

The control identifier is used to indicate a type of subsequent control information. A length of the control identifier is 4 bits, and currently, 0 to 6 have been used to indicate other types of control information. If the transmission suspension indication information is carried in a form of control information, the control identifier may be one of 7 to 15, to indicate that the type of the subsequent control information is the transmission suspension indication information. The transmission suspension type may be defined based on a transmission manner of transmission suspension in the IEEE 802.11 standard. For example, when the transmission suspension is transmission suspension corresponding to a preemption mechanism, two preemption types may be defined, and the two preemption types have different priorities. A quantity of padding symbols is used to indicate a quantity of padding symbols located after an A-MPDU subframe, and the padding symbol is used to help increase a processing time at the receive end. The transmission resumption time is used to indicate to the receive end a time at which transmission of a preemptable frame can be continued. Before the transmission of the preemptable frame is resumed, the receive end may be in a sleep mode based on the transmission resumption time, thereby achieving an effect of energy saving. Whether the acknowledgment information needs to be returned is used to indicate to the receive end whether the acknowledgment information needs to be returned when transmission suspension occurs at the designated location.

It should be noted that one or more pieces of indication information in the high throughput control field may alternatively be agreed upon by the transmit end and the receive end in advance. When the indication information that is agreed upon changes, an indication is provided again, and does not need to be carried in each A-MPDU subframe. Alternatively, the indication information in the high throughput control field may be carried in each A-MPDU subframe. This is not limited in this embodiment of this application.

An example of the following four manners of carrying the transmission suspension indication information is used for description in this embodiment of this application below, but this is not limited in this embodiment of this application.

In a first optional manner, if transmission suspension occurs, transmission suspension indication information carried in any A-MPDU subframe or a designated A-MPDU subframe in the at least one A-MPDU subframe indicates that transmission suspension occurs at the designated location. In other words, that transmission suspension occurs is determined when transmission suspension indication information carried in an A-MPDU subframe in the at least one A-MPDU subframe indicates that transmission suspension occurs at the designated location.

In a second optional manner, if transmission suspension occurs, that transmission suspension occurs is determined only when transmission suspension indication information carried in a designated A-MPDU subframe in the at least one A-MPDU subframe indicates that transmission suspension occurs at the designated location. For example, the designated A-MPDU subframes are first h A-MPDU subframes, for example, a first A-MPDU subframe or a second A-MPDU subframe, in A-MPDU subframes between every two transmission suspension subfields in the data field, and h is a positive integer. In this case, when the transmit end internally receives the indication of stopping transmission of the current PPDU, a to-be-transmitted designated A-MPDU closest to a moment at which it is determined that transmission suspension occurs may be selected to carry first transmission suspension indication information indicating that transmission suspension occurs at the designated location, to quickly notify the receive end that transmission suspension occurs. It should be noted that the moment at which it is determined that transmission suspension occurs is usually an internal moment of the transmit end, for example, a moment at which the transmit end internally receives the indication of stopping transmission of the current PPDU.

In a third optional manner, if transmission suspension occurs, transmission suspension indication information carried in each A-MPDU subframe that is from a moment at which it is determined that transmission suspension occurs to the transmission suspension subfield in which the designated location is located and that is in the at least one A-MPDU subframe indicates that transmission suspension occurs at the designated location.

In a fourth optional manner, the data field includes a plurality of A-MPDU subframes, and if transmission suspension occurs, transmission suspension indication information carried in at least two of the plurality of A-MPDU subframes indicates that transmission suspension occurs at the designated location.

Optionally, in the first, third, and fourth optional manners, when the transmit end internally receives the indication of stopping transmission of the current PPDU, a to-be-transmitted A-MPDU closest to the moment at which it is determined that transmission suspension occurs may be selected to carry the first transmission suspension indication information indicating that transmission suspension occurs at the designated location, to quickly notify the receive end that transmission suspension occurs.

Using the third optional manner as an example, as shown in FIG. 8, it is assumed that the data subfield A includes at least an A-MPDU subframe 5 to an A-MPDU subframe 7, the data subfield A includes at least an A-MPDU subframe 8 to an A-MPDU subframe 10, and each A-MPDU subframe carries transmission suspension indication information. When the transmit end internally triggers a transmission suspension mechanism to occur, assuming that transmission suspension starts to occur from the A-MPDU subframe 9, transmission suspension indication information carried in the A-MPDU subframe 5 to the A-MPDU subframe 8 indicates that transmission suspension does not occur at the designated location, and transmission suspension indication information carried in the A-MPDU subframe 9, the A-MPDU subframe 10, and each A-MPDU subframe before the transmission suspension subfield in which the designated location is located indicates that transmission suspension occurs at the designated location. It is assumed in FIG. 8 that the designated location belongs to a first transmission suspension subfield after the transmission suspension indication information. After transmission suspension occurs, the transmission suspension subfield 2, the data subfield C, and the PE subfield are not actually transmitted.

In the foregoing four optional manners, that transmission suspension occurs at the designated location is indicated by using a plurality of A-MPDU subframes. This can prevent the receive end from incorrectly decoding or missing decoding an A-MPDU subframe compared with that only one A-MPDU subframe is transmitted to indicate that transmission suspension occurs at the designated location.

In the PPDU provided in this embodiment of this application, whether transmission suspension occurs at the designated location may be explicitly indicated to the receive end by carrying, in each A-MPDU subframe, the transmission suspension indication information indicating whether transmission suspension occurs at the designated location. When transmission suspension occurs, transmission suspension indication information carried in a currently transmitted A-MPDU subframe indicates that transmission suspension occurs at the designated location, and after receiving the currently transmitted A-MPDU subframe, the receive end may determine that transmission suspension occurs at the designated location.

FIG. 9 is a schematic diagram of a structure of still another PPDU according to an embodiment of this application. The data field includes a plurality of symbols. For example, the symbol is an OFDM symbol. If transmission suspension occurs, transmission suspension indication information of the data field is a specific physical layer pattern symbol in the plurality of symbols. In other words, when the specific physical layer pattern symbol appears in the data field, it indicates that transmission suspension occurs at the designated location; or when the specific physical layer pattern symbol does not appear in the data field, it indicates that transmission suspension does not occur at the designated location.

Optionally, the specific physical layer pattern symbol is a special OFDM symbol and includes: an OFDM symbol only having an even quantity of subcarriers that have energy, an OFDM symbol only having an odd quantity of subcarriers that have energy, an OFDM symbol of a predetermined mode that is known to the receive end, an OFDM symbol the same as a previous OFDM symbol, or an OFDM symbol having a plurality of repeated waveforms.

For example, when the specific physical layer pattern symbol includes the OFDM symbol only having an even quantity of subcarriers that have energy and the OFDM symbol only having an odd quantity of subcarriers that have energy, the receive end may determine, by identifying energy of each subcarrier, whether transmission suspension occurs at the designated location. When the specific physical layer pattern symbol includes the OFDM symbol of the predetermined mode that is known to the receive end, for example, an EHT-LTF symbol, the receive end may determine, by identifying whether the OFDM symbol of the predetermined mode appears, whether transmission suspension occurs at the designated location. When the specific physical layer pattern symbol includes the OFDM symbol the same as the previous OFDM symbol, the receive end may determine, by identifying whether a current OFDM symbol is a duplicate symbol of the previous OFDM symbol, whether transmission suspension occurs at the designated location. When the specific physical layer pattern symbol includes the OFDM symbol having a plurality of repeated waveforms, for example, an HT-STF symbol, where the symbol has a length of 8 microseconds and includes five repetition periods of 1.6 microseconds, the receive end may determine, by identifying whether the OFDM symbol having a plurality of repeated waveforms appears, whether transmission suspension occurs at the designated location.

In this embodiment of this application, the data field may carry one or more specific physical layer pattern symbols, the one or more specific physical layer pattern symbols include one or a combination of a plurality of the OFDM symbols or may include a plurality of the repeated OFDM symbols. This is not limited in this embodiment of this application.

In FIG. 9, it is assumed that the data field that is originally defined to be transmitted and that is in the PPDU includes data of 3M symbols and a PE subfield located after the data of the 3M symbols. First M symbols in the 3M symbols are located in a data subfield A, middle M symbols are located in a data subfield B, and last M symbols are located in a data subfield C. A transmission suspension subfield is set between every two data subfields. The M symbols in the data subfield A and the M symbols in the data subfield B are actually transmitted symbols in the PPDU, and the M symbols in the data subfield C and the PE subfield located after the M symbols are not actually transmitted. In addition, it is assumed that the data subfield A includes at least a symbol 5 to a symbol 7, and the data subfield A includes at least a symbol 8 to a symbol 10. When the transmit end internally triggers a transmission suspension mechanism to occur, if it is determined in a process of transmitting the symbol 8 that transmission suspension occurs (to be specific, the transmit end internally receives the indication of stopping transmission of the current PPDU), a specific physical layer pattern symbol is inserted as a new symbol 9, to indicate that transmission suspension occurs at the designated location. Subsequent symbols are correspondingly adjusted in sequence. For example, the original symbol 9 is used as a new symbol 10. It is assumed in FIG. 9 that the designated location belongs to a first transmission suspension subfield after the transmission suspension indication information. After transmission suspension occurs, the transmission suspension subfield 2, the data subfield C, and the PE subfield are not actually transmitted.

It should be noted that because the new symbol 9 is inserted, originally, the data field includes the data of the 3M symbols, and in this case, the data field includes data of 3M+1 symbols, that is, the data subfield B includes M+1 symbols. In this case, the following two manners may be used to continue transmission: One manner is that M symbols including the specific physical layer pattern symbol are still transmitted when the data subfield B is transmitted, and a last symbol that is originally to be transmitted is not transmitted. The other manner is that transmission suspension is performed after the M+1 symbols of the data subfield B are transmitted.

Similarly, if transmission suspension stops, and a last symbol in the data subfield B is not transmitted, the symbol may be first transmitted, and then, the transmission suspension subfield 2, the data subfield C, and the PE subfield are transmitted.

In the PPDU provided in this embodiment of this application, the specific physical layer pattern symbol is the transmission suspension indication information indicating that transmission suspension occurs at the designated location, and therefore, that transmission suspension occurs at the designated location can be explicitly indicated to the receive end. After receiving the specific physical layer pattern symbol, the receive end may determine that transmission suspension occurs at the designated location.

In a first optional manner of this embodiment of this application, as shown in FIG. 7 to FIG. 11, the transmission suspension subfield may be implemented by a plurality of types of subfields. For example, the transmission suspension subfield is a subfield carrying auxiliary information used to assist the receive end in implementing one or more functions of the receive end. For example, the auxiliary information may be data retransmission information or a midamble (Midamble). When the auxiliary information is the midamble, the transmission suspension subfield is referred to as a midamble subfield.

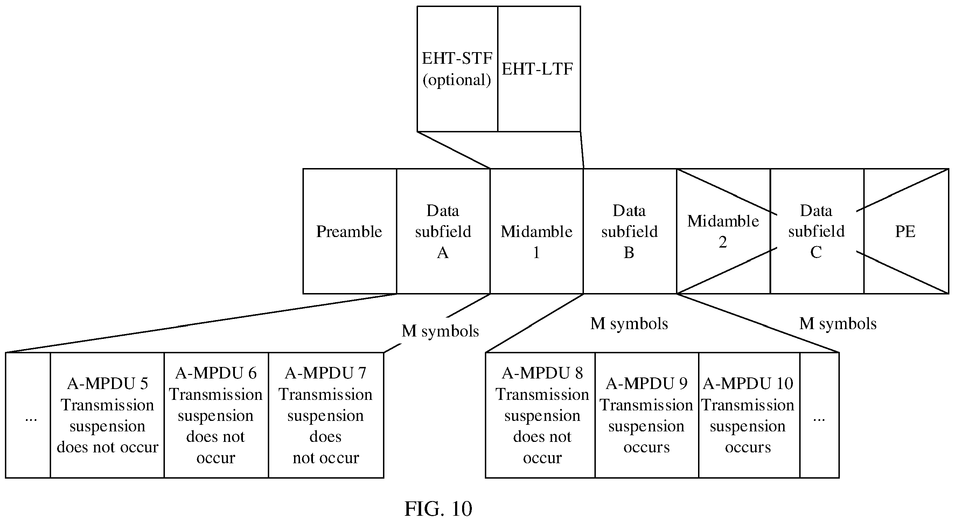

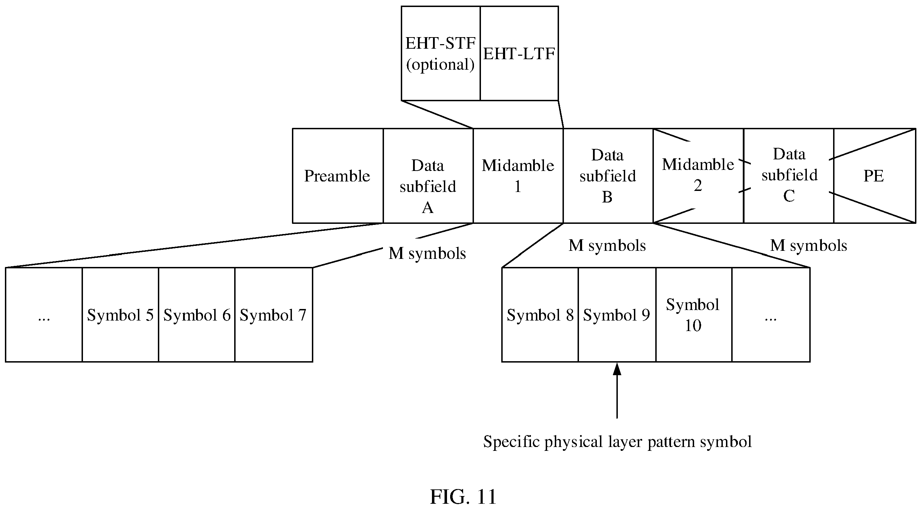

FIG. 10 and FIG. 11 are schematic diagrams of structures of two PPDUs according to another embodiment of this application. It is assumed that a transmission suspension subfield includes a midamble subfield, the midamble subfield is a subfield in which a midamble is located, and the midamble is used to assist the receive end in performing channel estimation, so that the receive end performs channel refreshing.

As shown in FIG. 10 and FIG. 11, the midamble subfield includes an EHT-LTF subfield, and the EHT-LTF subfield includes one or more EHT-LTF symbols, that is, the midamble subfield includes P EHT-LTF symbols, and P is a positive integer. Optionally, a quantity of EHT-LTF symbols of the midamble may be a fixed quantity or a variable quantity. The quantity may be indicated by using a preamble. Optionally, the preamble (for example, an L-SIG field) includes second quantity indication information, to indicate a quantity of EHT-LTF symbols included in the midamble subfield.

In an optional example, a length of the EHT-LTF symbol of the midamble subfield is smaller than a length of an EHT-LTF symbol of the preamble. In another optional manner, the midamble field includes a designated symbol. For example, the designated symbol may be an EHT-LTF symbol, or the designated symbol is a higher-order modulation (such as 1024QAM, Quadrature Amplitude Modulation, quadrature amplitude modulation) training symbol that is known to the transmit end and the receive end in advance. Optionally, a length of the designated symbol is smaller than a length of another symbol in the data field. For example, the length (which is usually 12.8 microseconds if a guard interval is excluded) of another symbol (such as another OFDM symbol) in the data field is twice or four times the length (from which a guard interval is excluded) of the designated symbol.

Further, optionally, the midamble subfield may further include an extremely high throughput short training field (extremely high throughput short training field, EHT-STF).

Explanations for other fields in FIG. 10 and FIG. 11 may be the same as the explanations for corresponding fields in FIG. 8 and FIG. 9 or may be adjusted based on the explanations for corresponding fields in FIG. 8 and FIG. 9 based on an actual situation. Details are not described again in this embodiment of this application.

It can be learned from the foregoing content that a transmission suspension subfield is set every M symbols in the data field. Correspondingly, a length of the transmission suspension subfield may alternatively be M symbols. In this way, transmission complexity can be reduced. Therefore, a length of the midamble subfield is M symbols.

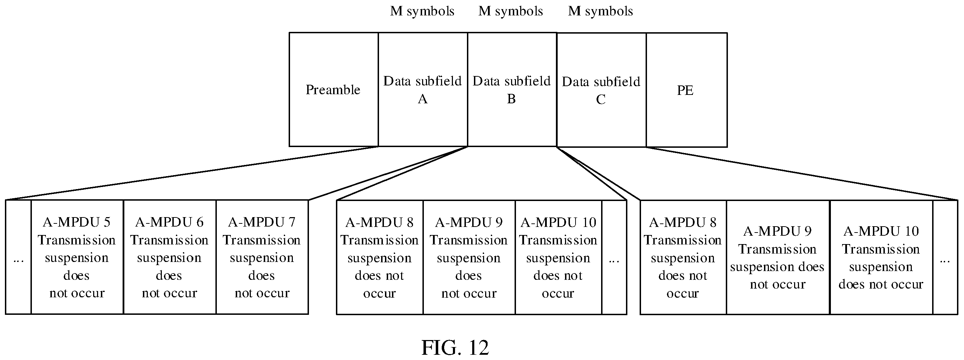

In a second optional implementation of this embodiment of this application, as shown in FIG. 12 to FIG. 17, if the transmission suspension indication information indicating that transmission suspension occurs is located between $M \times (K-1) + 1$ symbols and $M \times K$ symbols, a field in which N symbols after the $M \times K$ symbols are located and that is in the data field is a transmission suspension subfield, M, N, and K are positive integers, M represents a designated quantity of intervals, and the designated location is a location in the transmission suspension subfield. Therefore, both the transmit end and the receive end may check transmitted data by using M symbols as a unit, to determine the transmission suspension subfield. The transmission suspension subfields are not periodically distributed and only appear when transmission suspension occurs. Therefore, transmission overheads are reduced.

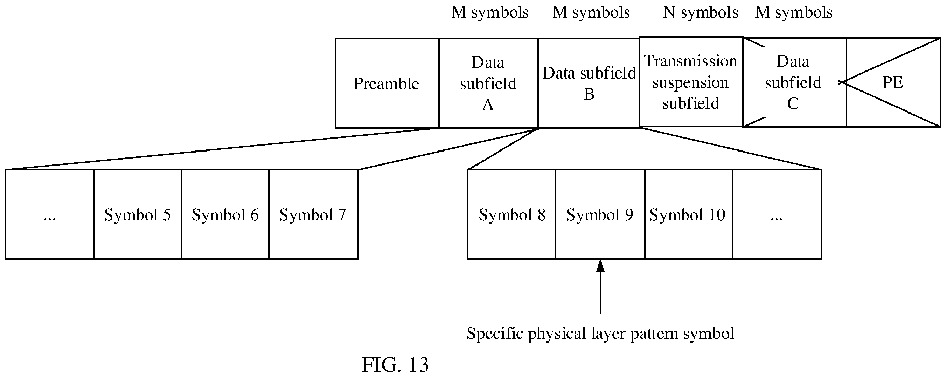

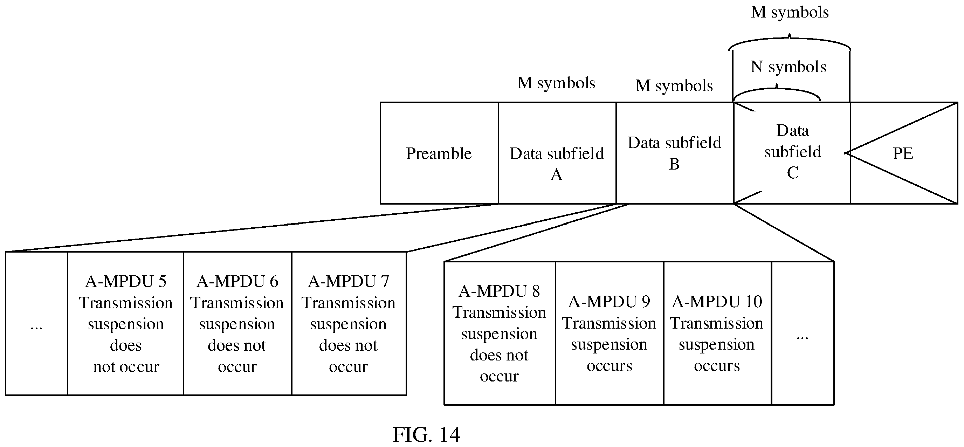

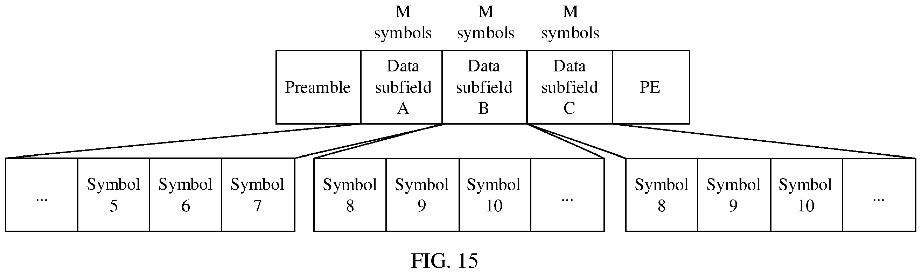

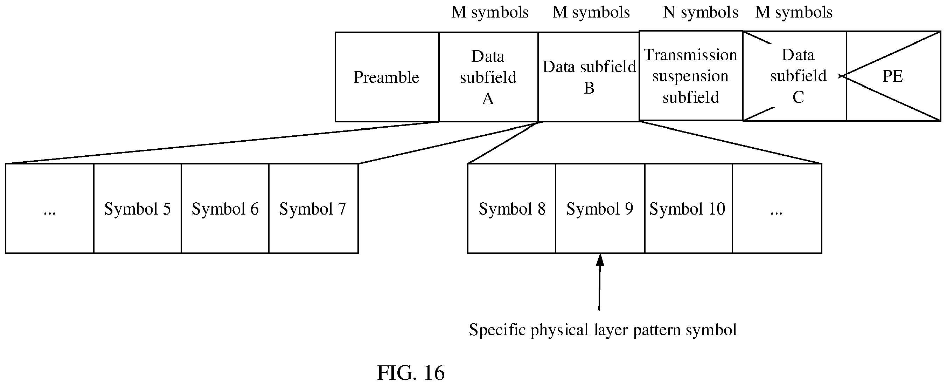

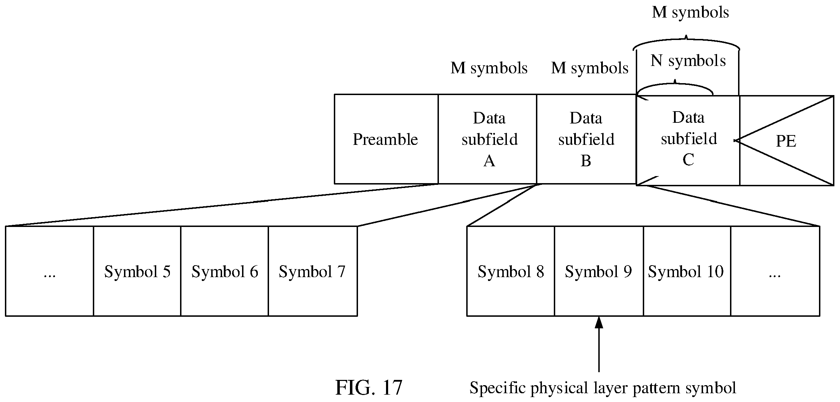

FIG. 12 to FIG. 17 are schematic diagrams of structures of two other PPDUs according to another embodiment of this application. FIG. 12 and FIG. 15 are schematic diagrams of structures of PPDUs when transmission suspension does not occur. FIG. 13 and FIG. 14 are schematic diagrams of structures of the PPDU shown in FIG. 12 when transmission suspension occurs. FIG. 16 and FIG. 17 are schematic diagrams of structures of the PPDU shown in FIG. 15 when transmission suspension occurs. It is assumed that the PPDU includes a preamble and a data field, and the data field includes data of 3M symbols and a PE subfield located after the data of the 3M symbols. First M symbols in the 3M symbols are located in a data subfield A, middle M symbols are located in a data subfield B, and last M symbols are located in a data subfield C. In other words, both the transmit end and the receive end perform data detection by using M symbols as a unit.

If the transmission suspension indication information indicating that transmission suspension occurs is located in the data subfield B, a field in which N symbols after the data subfield B are located and that is in the data field is the transmission suspension subfield.

In an optional example, as shown in FIG. 13 or FIG. 16, the transmission suspension subfield is a subfield inserted into the data field. In other words, the transmission suspension subfields are N symbols that are newly inserted after the data subfield B. Transmission suspension starts from the designated location in the transmission suspension subfield, and the N symbols may be padding symbols, PEs, or idle symbols (to be specific, symbols carrying no data), or the transmission suspension subfield is a subfield occupied by a transmission suspension period whose length is N symbols. In FIG. 13, assuming that the designated location is an end location of the transmission suspension subfield, neither the data subfield C nor the PE subfield is actually transmitted. It should be noted that when transmission suspension stops, because the transmission suspension subfield is a newly inserted subfield, and a symbol in the subfield basically does not include actual data content, the transmission suspension subfield may be no longer transmitted, and only the data subfield C and the PE subfield are transmitted. However, the transmission suspension subfield may alternatively be transmitted, to provide a preparation time for the receive end to receive the data subfield C and the PE subfield.

In another optional example, as shown in FIG. 14 or FIG. 17, the transmission suspension subfield is an original subfield in the data field. For example, if N is less than M, the transmission suspension subfield is a part of the data subfield C. If N=M, the transmission suspension subfield is the data subfield C. If N is greater than M, the transmission suspension subfield includes at least the data subfield C and may further include a part or all of the PE subfield. In FIG. 14, assuming that the designated location is a start location of the transmission suspension subfield, and N is less than M, the transmission suspension subfield is located in the data subfield C, and neither the data subfield C nor the PE subfield is actually transmitted. It should be noted that when transmission suspension stops, the data subfield C and the PE subfield may continue to be transmitted. In this case, the transmission suspension subfield is actually a virtual subfield and is only a subfield that is determined so as to determine the designated location.

Explanations for other fields in FIG. 12 to FIG. 17 may be the same as the explanations for corresponding fields in FIG. 8 and FIG. 9 or may be adjusted based on the explanations for corresponding fields in FIG. 8 and FIG. 9 based on an actual situation. Details are not described again in this embodiment of this application.

When data transmission is performed by using the second optional implementation, a midamble does not need to be set, thereby reducing data transmission overheads.

In the first optional implementation and the second optional implementation, the preamble includes first quantity indication information, and the first quantity indication information is used to indicate the designated quantity M of intervals. To be specific, a quantity of symbols between every two transmission suspension subfields is indicated in the first optional implementation, or a division interval for symbols in the data field is indicated in the second optional implementation. For example, the first quantity indication information is located in an L-SIG, an EHT-SIG-A, an EHT-SIG-B, or the like.

In this embodiment of this application, when a plurality of transmission suspension subfields appear in the PPDU, lengths (that is, the quantity of symbols of the transmission suspension subfield) of the plurality of transmission suspension subfields may be equal or unequal. Usually, the lengths of the plurality of transmission suspension subfields are equal and are a fixed value. The fixed value may be indicated by using first length indication information carried in the preamble. In other words, the length of the transmission suspension subfield may be indicated by using the first length indication information. For example, the fixed value is located in an L-SIG, an EHT-SIG-A, an EHT-SIG-B, or the like.

Optionally, the designated location indicated by the transmission suspension indication information is a location that is agreed upon by the transmit end and the receive end in advance and that is related to transmission suspension information, varies with a location of the transmission suspension indication information, and may be determined based on the transmission suspension indication information.

In an optional manner, the designated location is a start location of a first transmission suspension subfield after the transmission suspension indication information. In another optional manner, the designated location is an end location or a middle location of a first transmission suspension subfield after the transmission suspension indication information. In still another optional manner, the designated location is a start location, an end location, or a middle location of an F$^{th}$ transmission suspension subfield after the transmission suspension indication information, and F is a positive integer greater than 1. For example, F is 2 or 3. In FIG. 7 to FIG. 11, an example in which the designated location is the end location of the first transmission suspension subfield after the transmission suspension indication information is used for description. In FIG. 12 and FIG. 13, an example in which the designated location is the end location of the first transmission suspension subfield after the transmission suspension indication information is used for description.

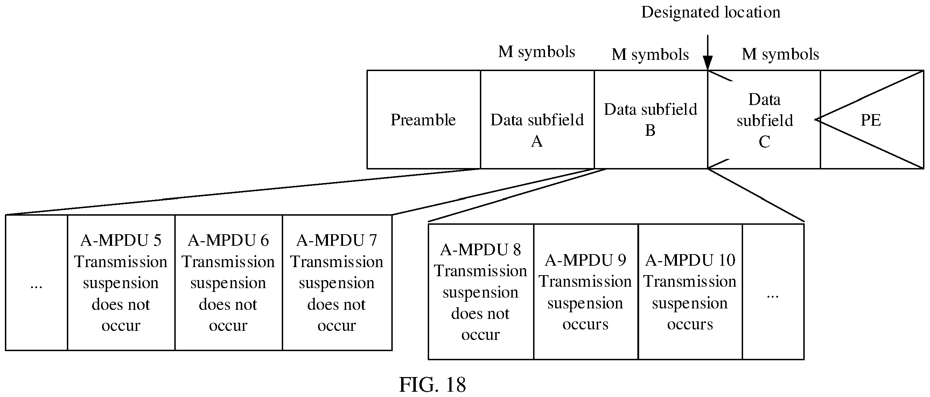

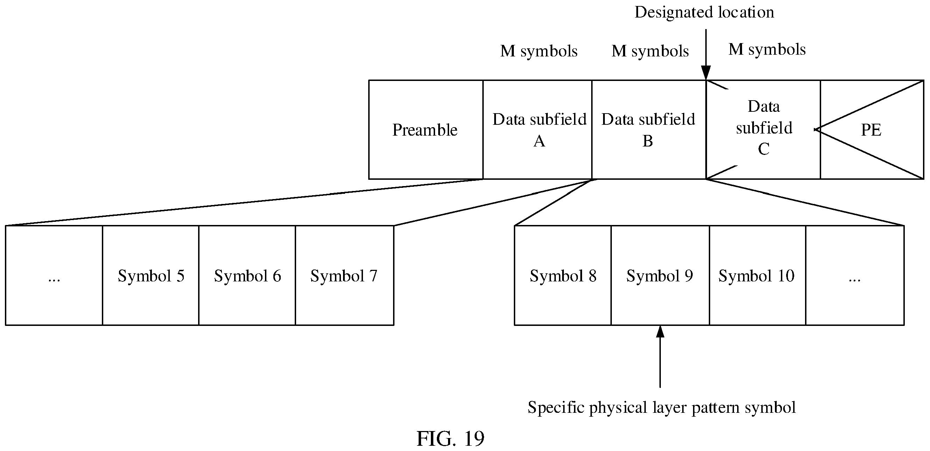

In a third optional implementation of this embodiment of this application, as shown in FIG. 18 and FIG. 19, if the transmission suspension indication information indicating that transmission suspension occurs is located between $M \times (K - 1) + 1$ symbols and $M \times K$ symbols, the designated location is an end location of the $M \times K$ symbols. M and K are positive integers, and M is the designated quantity of intervals.

FIG. 18 is a schematic diagram of a structure of the PPDU shown in FIG. 12 when transmission suspension occurs. FIG. 19 is a schematic diagram of a structure of the PPDU shown in FIG. 15 when transmission suspension occurs. It is assumed that the PPDU includes a preamble and a data field, and the data field includes data of 3M symbols and a PE subfield located after the data of the 3M symbols. First M symbols in the 3M symbols are located in a data subfield A, middle M symbols are located in a data subfield B, and last M symbols are located in a data subfield C. In other words, both the transmit end and the receive end perform data detection by using M symbols as a unit. If the transmission suspension indication information indicating that transmission suspension occurs is located in the data subfield B (that is, between M+1 symbols and 2M symbols, K=2, and the designated location is an end location of the 2M symbols), neither the data subfield C nor the PE subfield is actually transmitted.

Explanations for other fields in FIG. 18 and FIG. 19 may be the same as the explanations for corresponding fields in FIG. 8 and FIG. 9 or may be adjusted based on the explanations for corresponding fields in FIG. 8 and FIG. 9 based on an actual situation. Details are not described again in this embodiment of this application.

Because the designated location can be determined without a need to set another subfield used to indicate the designated location, transmission overheads are reduced.

In the foregoing three optional implementations of this embodiment of this application, because the designated location is located after the transmission suspension indication information, there is a distance between the designated location and the transmission suspension indication information in time domain. In this way, the transmit end performs transmission suspension of the PPDU only when particular duration after occurrence of transmission suspension expires. Therefore, corresponding preparation duration for an action related to transmission suspension is reserved for both the transmit end and the receive end, to provide a buffer time segment, thereby ensuring that the transmit end and the receive end can implement efficient transmission suspension.

It should be noted that because a length of the data field is related to actually transmitted data of the data field, a quantity of symbols in the data field may not be an integer multiple of M. Therefore, when the first optional implementation to the third optional implementation are used, and when symbols in the data field are divided by using M as an interval, a quantity of symbols included in a last segment of subfields that are obtained through division is less than or equal to M. In other words, in the first optional implementation, a subfield carrying data after a last transmission suspension subfield includes symbols whose quantity is less than or equal to M. In the second optional implementation, a last subfield carrying data includes symbols whose quantity is less than or equal to M. Subsequent embodiments are all described by using an example in which a quantity of symbols in the data field is an integer multiple of M. However, this is not limited in this embodiment of this application.

Optionally, in any PPDU shown in FIG. 7 to FIG. 19, the preamble may carry suspension warning information, and the suspension warning information is used to indicate whether there is a possibility of transmission suspension. In other words, the suspension warning information is used to indicate whether the currently transmitted PPDU supports transmission suspension. Optionally, in the PPDU shown in FIG. 9, 11, 16, 17, or 19, the suspension warning information is further used to indicate to the receive end whether the specific physical layer pattern symbol needs to be identified.

Because the preamble in the PPDU is transmitted before the data field, whether there is a possibility of transmission suspension in a process of transmitting the PPDU can be indicated to the receive end by carrying the suspension warning information in the preamble. When the suspension warning information indicates that there is a possibility of transmission suspension, the receive end is always ready to stop receiving the currently transmitted PPDU at the designated location. When the suspension warning information indicates that there is no possibility of transmission suspension, the receive end receives the currently transmitted PPDU according to an existing WLAN protocol.

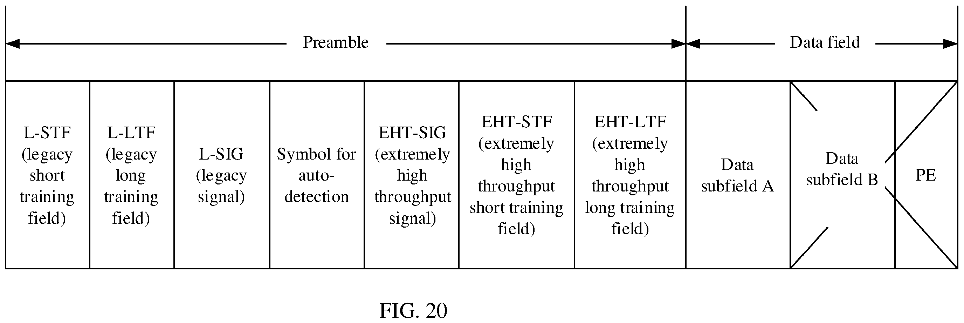

For example, FIG. 20 is a schematic diagram of a structure of still another PPDU according to yet another embodiment of this application. As shown in FIG. 20, a preamble of the PPDU includes a legacy short training field (legacy short training field, L-STF), a legacy long training field (legacy long training field, L-LTF), an L-SIG field, a symbol for auto-detection (symbol for auto-detection), an extremely high throughput signal (extremely high throughput, EHT-SIG) field, an extremely high throughput short training field (extremely high throughput short training field, EHT-STF), and an extremely high throughput long training field (extremely high throughput long training field, EHT-LTF). Refer to the PPDU shown in any one of FIG. 5 and FIG. 7 to FIG. 19 for content of the data field of the PPDU. Details are not described herein in this embodiment of this application. Optionally, the suspension warning information may be located in the EHT-SIG field of the preamble. Optionally, the preamble carries field indication information, and the field indication information is used to indicate that the PPDU includes the transmission suspension subfield. For example, the EHT-SIG field of the preamble includes a Doppler field, and the field indication information may be located in the Doppler field.

Further, optionally, the EHT-SIG field is an EHT-SIG field A. Based on this, the PPDU may further include an EHT-SIG field B.

In conclusion, in the data transmission method provided in this embodiment of this application, the suspension indication information indicates whether transmission suspension occurs at the designated location after the transmission suspension indication information, so that when the transmit end needs to stop transmission of the current PPDU, the transmit end can notify, by using the transmission suspension indication information, the receive end that transmission of the current PPDU is suspended at the designated location, or the receive end can determine, based on the transmission suspension indication information, that transmission suspension occurs at the designated location, thereby improving data transmission flexibility.

The data transmission method provided in this embodiment of this application is applicable to a scenario in which a preemption mechanism exists or a scenario in which a quiet period (Quiet Period) mechanism exists. The data transmission method in the two scenarios is described by using the following two optional embodiments in the embodiments of this application.

In a first optional embodiment, the data transmission method is applicable to the scenario in which the preemption mechanism exists. The transmission suspension indication information is preemption indication information, and the preemption indication information is used to indicate whether the preemption mechanism occurs at the designated location.

In the scenario in which the preemption mechanism exists, when the preemption mechanism occurs in a process of transmitting a PPDU, the transmit end may suspend transmission of the A-MPDU and transmit another PPDU with a higher service priority, to reduce a transmission latency with a higher service priority and improve data transmission flexibility. That the preemption mechanism occurs means that, in a process in which the transmit end transmits a PPDU, the transmit end suspends transmission of the PPDU, where actual transmission duration of the PPDU is less than originally-defined transmission duration indicated by a legacy signal (legacy signal, L-SIG) field of the PPDU. That the preemption mechanism does not occur means that the transmit end normally transmits a PPDU. In this embodiment of this application, the preemption mechanism may also be referred to as a transmission suspension mechanism. Whether the preemption mechanism occurs is used to indicate whether the transmit end suspends transmission of a current PPDU. Optionally, a condition for triggering occurrence of the preemption mechanism includes that a data frame with a relatively high service priority preempts a transmission channel of a data frame with a relatively low service priority, the transmit end is required to stop transmission of a current frame, or the like. A condition for triggering occurrence of the preemption mechanism is not limited in this embodiment of this application. In embodiments, about the preemption mechanism, of this application, description is provided by using an example in which that a data frame with a higher service priority preempts a transmission channel of a data frame with a lower service priority is used as a condition for triggering occurrence of the preemption mechanism.

For example, in the scenario in which the preemption mechanism exists, the transmit end and the receive end provided in the embodiments of this application may each include a preemptable queue and an express queue, and there is a communication interface between the preemptable queue and the express queue, so that the preemptable queue and the express queue communicate with each other. The preemptable queue is used to store a preemptable frame (preemptable frame), and the express queue is used to store an express frame (express frame). The express frame is a frame with a relatively high service priority, and the preemptable frame is a frame with a relatively low service priority. Because a latency requirement of a frame with a relatively high service priority is usually higher than a latency requirement of a frame with a relatively low service priority, the express frame has a higher latency requirement in comparison with the preemptable frame. Optionally, in a process in which the transmit end sends a preemptable frame, when an express frame needs to be sent, the transmit end receives an indication that is internally sent by the transmit end and that indicates to stop transmission of the current PPDU, so as to trigger a preemption mechanism to occur; and adds corresponding signaling information to the current PPDU, to indicate to the receive end that transmission of the PPDU is to be suspended.

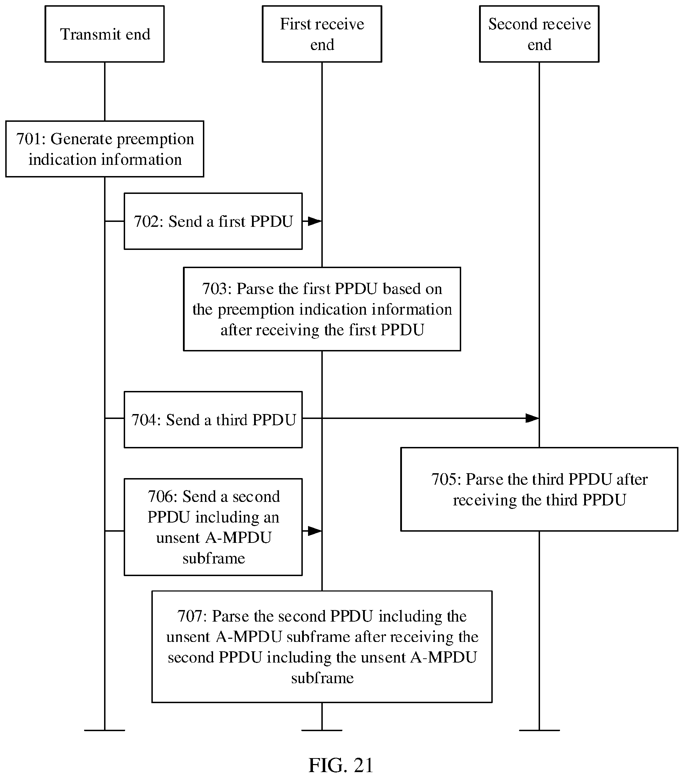

FIG. 21 is a flowchart of a data transmission method according to an embodiment of this application. The data transmission method may be used in the data transmission system shown in FIG. 1. As shown in FIG. 21, the method includes the following steps.

Step 701: A transmit end generates preemption indication information.

In an optional embodiment of this application, the preemption indication information is used to indicate whether a preemption mechanism occurs.

In another optional embodiment of this application, the preemption indication information is used to indicate that a preemption mechanism occurs.

Step 702: The transmit end sends a first PPDU carrying the transmission suspension indication information.

The first PPDU is a PPDU of a preemptable frame. The PPDU includes a preamble and a data field, and the data field carries the preemption indication information.

Step 703: A first receive end parses the first PPDU based on the preemption indication information after receiving the first PPDU.

Optionally, after completing parsing of the first PPDU, the first receive end may generate acknowledgment information, and return the acknowledgment information to the transmit end.

Further, if the preemption mechanism occurs, the data transmission method further includes the following steps.

Step 704: The transmit end sends a third PPDU.

The third PPDU is a PPDU including an express frame. For example, a priority of the third PPDU is higher than a priority of the first PPDU.

Step 705: A second receive end parses the third PPDU after receiving the third PPDU.

Optionally, after completing parsing of the third PPDU, the second receive end may generate acknowledgment information of the third PPDU, and return the acknowledgment information of the third PPDU to the transmit end.

Step 706: The transmit end sends a second PPDU including an unsent A-MPDU subframe.

When transmission of the third PPDU ends, it indicates that the preemption mechanism ends, and the transmit end sends the second PPDU including the unsent A-MPDU subframe.

Step 707: The first receive end parses the second PPDU including the unsent A-MPDU subframe after receiving the second PPDU including the unsent A-MPDU subframe.

As an example of the data transmission method shown in FIG. 6, for step 701 to step 703, respectively correspondingly refer to step 601 to step 603, and for step 706 and step 707, respectively correspondingly refer to step 604 and step 605. In other words, step 701 to step 703 and step 706 and step 707 may be the same as corresponding steps or may be adaptively adjusted. Compared with step 601 to step 605, in the scenario in which the preemption mechanism exists, in a period of the preemption mechanism, the transmit end and the second receive end further need to perform step 704 and step 705 to transmit the third PPDU.

It should be noted that, the first receive end and the second receive end may be a same receive end or may be different receive ends. This is not limited in this embodiment of this application.

Optionally, this embodiment of this application provides two preemption transmission modes.

In a first preemption transmission mode, step 704 and step 706 are simultaneously performed. The transmit end simultaneously sends a PPDU (that is, the third PPDU) including an express frame and a PPDU (that is, the second PPDU) including an unsent A-MPDU subframe in a preemptable frame in an orthogonal frequency division multiple access (orthogonal frequency division multiple access, OFDMA) manner or a multiple user-multiple input multiple output (multiple user-multiple input multiple output, MU-MIMO) manner. It should be noted that, the first preemption transmission mode can reduce latency impact of the preemption mechanism on the preemptable frame and avoid a hunger phenomenon. In this scenario, the transmit end and the first receive end substantially only perform short transmission suspension (suspension between a transmission suspension moment of the first PPDU and a sending start moment of the second PPDU). In this way, fast transmission of the PPDU between the transmit end and the first receive end can be still ensured.

In a second preemption transmission mode, step 704 and step 706 are performed in sequence. The transmit end sends the PPDU including the express frame. Within a current transmit opportunity (transmit opportunity, TXOP) or originally-defined transmission duration of a preemptable PPDU, if transmission of the express frame (that is, the third PPDU) is completed, the transmit end continues to send the PPDU including the unsent A-MPDU subframe in the preemptable frame, that is, the second PPDU. Otherwise, after contending for a channel again, the transmit end sends the PPDU including the unsent A-MPDU subframe in the preemptable frame.

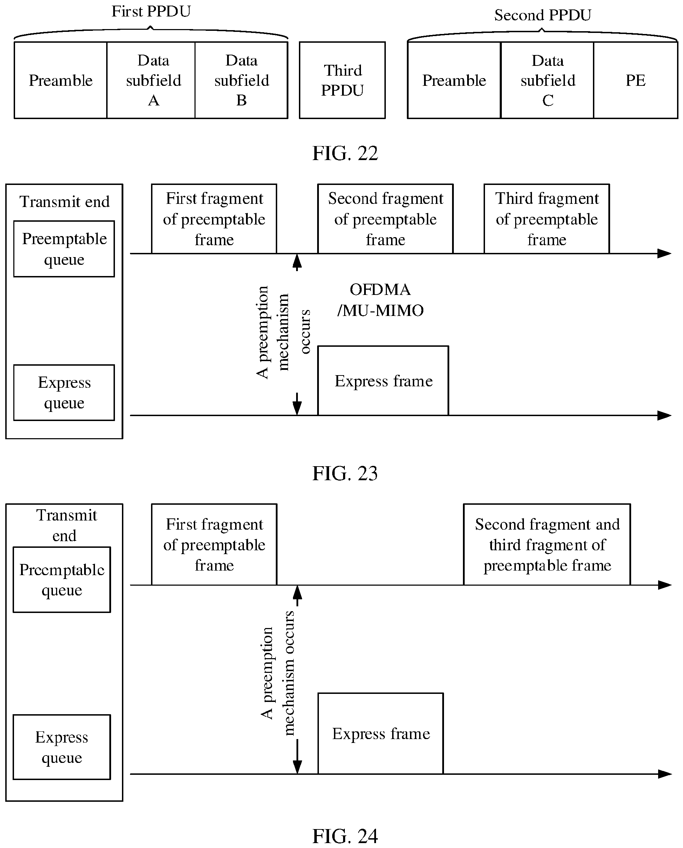

For example, the first PPDU that originally needs to be transmitted is the PPDU shown in FIG. 12 or FIG. 15 and includes a data subfield A, a data subfield B, a data subfield C, and a PE subfield. When the first PPDU is applied to a scenario in which the preemption mechanism exists, as shown in FIG. 8 to FIG. 11, FIG. 13, FIG. 14, and FIG. 16 to FIG. 19, because a new third PPDU (whose priority is, for example, higher than that of the first PPDU) is transmitted, transmission of the first PPDU transmitted in step 702 is not substantially completed, and the data subfield C and the PE subfield are not transmitted (that is, locations at which crosses lie in the figures). At last, a data transmission status is shown in FIG. 22. A first PPDU is first used to transmit a data subfield A and a data subfield B, and then a second PPDU is used to transmit a data subfield C and a PE subfield. In other words, data that originally needs to be transmitted in the first PPDU is split into two PPDUs for carrying. A third PPDU is transmitted between the first PPDU and the second PPDU or a third PPDU and the second PPDU are simultaneously transmitted. An example in which the third PPDU is transmitted between the first PPDU and the second PPDU is used in FIG. 22 for description.

It should be noted that if a transmission time of the third PPDU is relatively short, and the first receive end is different from the second receive end, transmission suspension of the first PPDU caused by transmission of the third PPDU is similar to an effect of a quiet period in a subsequent embodiment, the second PPDU may alternatively be continued transmission of the first PPDU instead of a new PPDU.

For example, it is assumed that the preemptable frame includes a first fragment, a second fragment, and a third fragment, and the preemption mechanism occurs after the transmit end sends the first fragment in the preemptable frame. The first fragment, the second fragment, and the third fragment each include at least one A-MPDU subframe. For example, refer to FIG. 5. The first fragment includes the m A-MPDU subframes in the data subfield A, and a union set of A-MPDU subframes included in the second fragment and the third fragment includes the (n-m) A-MPDU subframes in the data subfield B. FIG. 23 is a schematic diagram of data transmission in a first preemption transmission mode according to an embodiment of this application. As shown in FIG. 23, a transmit end simultaneously transmits, in an OFDMA manner or an MU-MIMO manner (OFDMA/MU-MIMO for short), an express frame in an express queue and a second fragment and a third fragment that are in a preemptable frame in a preemptable queue. In addition, the second fragment and the third fragment that are in the preemptable frame may alternatively be aggregated into one A-MPDU in a frame aggregation manner, and then the A-MPDU is sent. FIG. 24 is a schematic diagram of data transmission in a second preemption transmission mode according to an embodiment of this application. As shown in FIG. 24, a transmit end first transmits an express frame in an express queue, and then transmits a second fragment and a third fragment that are in a preemptable frame in a preemptable queue.

In the data transmission method provided in this embodiment of this application, when the transmit end needs to stop transmission of the current PPDU, the transmit end can notify, by using the preemption indication information, the receive end that transmission of the current PPDU is suspended at the designated location, thereby improving data transmission flexibility. In a process in which the transmit end transmits a PPDU, when the transmit end needs to transmit a data frame with a relatively high service priority, transmission of the current PPDU can be suspended, and the data frame with a relatively high service priority can be transmitted in a timely manner. Therefore, a transmission latency of the data frame with a relatively high service priority can be reduced. Further, reliability of the data transmission system is improved, and a throughput of the data transmission system is improved.

In addition, the preemption indication information used to indicate whether the preemption mechanism occurs is carried in each A-MPDU subframe, so that whether the preemption mechanism occurs at the designated location can be explicitly indicated to the receive end.

In a second optional embodiment, the data transmission method is applicable to the scenario in which the quiet period (Quiet Period) mechanism exists. When the quiet period exists in a process of transmitting a PPDU, the transmit end may suspend transmission of the A-MPDU in the quiet period, and continue to transmit the A-MPDU after the quiet period. The quiet period is a period in which the transmit end and the receive end do not perform data transmission. Correspondingly, the transmission suspension indication information is quiet period indication information, and the quiet period indication information is used to indicate whether the quiet period is generated at the designated location after the quiet period indication information.

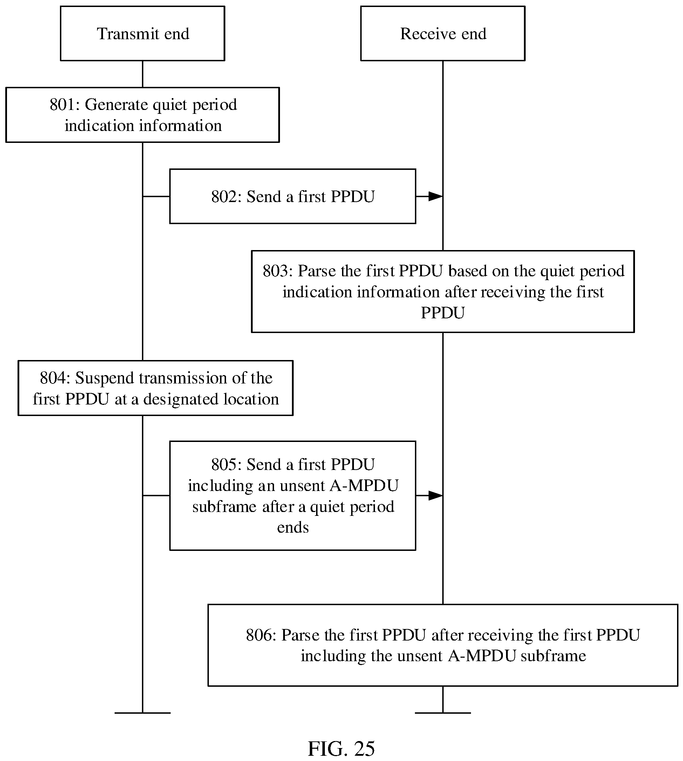

FIG. 25 is a flowchart of a data transmission method according to an embodiment of this application. The data transmission method may be used in the data transmission system shown in FIG. 1. As shown in FIG. 25, the method includes the following steps.

Step 801: A transmit end generates quiet period indication information.

In an optional embodiment of this application, the quiet period indication information is used to indicate whether a quiet period is generated at a designated location after the quiet period indication information.

In another optional embodiment of this application, the quiet period indication information is used to indicate that a quiet period is generated at a designated location after the quiet period indication information.

Step 802: The transmit end sends a first PPDU carrying the transmission suspension indication information.

The first PPDU includes a preamble and a data field. The data field carries the quiet period indication information.

Step 803: A receive end parses the first PPDU based on the quiet period indication information after receiving the first PPDU.

Optionally, after completing parsing of the received first PPDU, the receive end may generate acknowledgment information, and return the acknowledgment information to the transmit end.

Further, if the quiet period is generated, the data transmission method further includes the following steps.

Step 804: The transmit end suspends transmission of the first PPDU at the designated location.

When arriving at the designated location, the transmit end suspends transmission of the first PPDU.

Correspondingly, the receive end determines, based on the quiet period indication information, that transmission of the first PPDU is suspended at the designated location.

In a scenario in which a quiet period mechanism exists, a length of the quiet period may be fixed or variable. The length of the quiet period may be a length agreed upon by the transmit end and the receive end, for example, F symbols, or may be indicated by using second length indication information carried in a preamble of the first PPDU.

For example, it is assumed that the transmission suspension subfield is a midamble subfield, the first length indication information indicates that a length of the midamble subfield is M, the second length indication information indicates that the length of the quiet period is F, and F is less than or equal to M.

The transmission suspension means that the transmit end does not send data to the receive end in the quiet period. However, the transmit end may execute another action. For example, the transmit end may switch to a listen mode to listen to idleness or busyness of another channel, or reserve, for other nodes, a channel resource of a time segment in which the quiet period is located, for data transmission, or receive uplink data (for example, some urgent uplink data), such as information associated with a station or handshake information.

Step 805: The transmit end sends the first PPDU including an unsent A-MPDU subframe after the quiet period ends.

The unsent A-MPDU subframe is an A-MPDU subframe that originally needs to be sent but is not sent in the first PPDU. In the scenario in which the quiet period mechanism exists, duration of transmission suspension is actually the length of the quiet period.

Step 806: The receive end parses the first PPDU after receiving the first PPDU including the unsent A-MPDU subframe.

As an example of the data transmission method shown in FIG. 6, for step 801 to step 803, respectively correspondingly refer to step 601 to step 603, and for step 805 and step 806, respectively correspondingly refer to step 604 and step 605. In other words, step 801 to step 803 and step 805 and step 806 may be the same as corresponding steps or may be adaptively adjusted. Details are not described in this embodiment of this application.

It should be noted that because the quiet period is only a transmission suspension period, and in the quiet period, no new PPDU is inserted between the transmit end and the receive end, the first PPDU continues to be transmitted in step 805, and a new PPDU does not need to be generated for transmission.

In the PPDUs shown in FIG. 8 to FIG. 11, FIG. 13, FIG. 14, and FIG. 16 to FIG. 19, an example in which the data subfields C and the PE subfields of the PPDUs are not transmitted is used for description. When the data transmission method provided in this embodiment of this application is applied to the scenario in which the quiet period exists, the data subfield C and the PE subfield of the PPDU continue to be transmitted after the quiet period. Based on a principle the same as that of the foregoing three optional implementations, a construction principle of the PPDU in the quiet period scenario is described in this embodiment of this application by using the following three optional implementations as an example.

In a first optional implementation, a quiet period subfield is set every M symbols in the data field, and the designated location is a location in the quiet period subfield, that is, belongs to the quiet period subfield, M is a positive integer, and M represents a designated quantity of intervals.

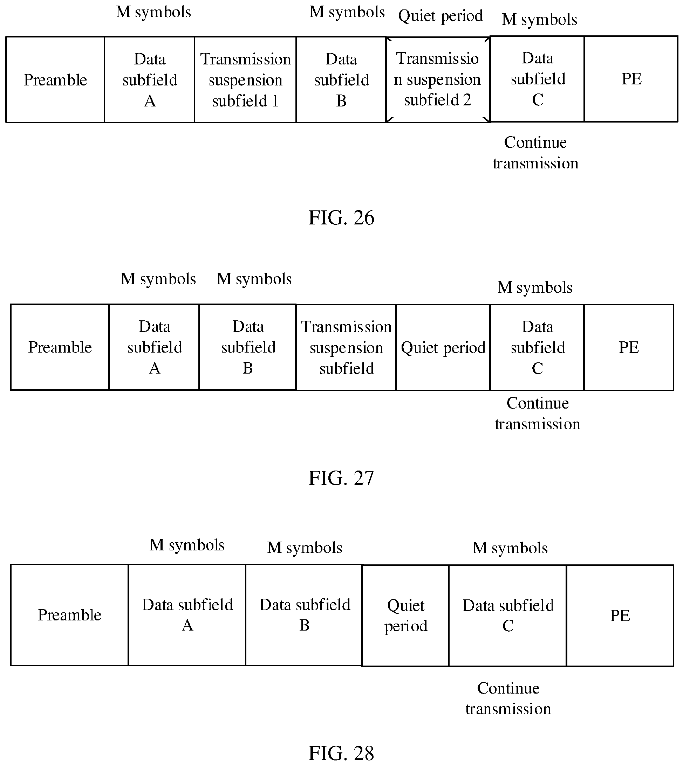

As shown in FIG. 26, a construction principle of the data field in the PPDU shown in FIG. 26 is the same as construction principles of the PPDUs shown in FIG. 7 to FIG. 11. It is assumed that the data field that is originally defined to be transmitted and that is in the PPDU includes data of 3M symbols and a PE subfield located after the data of the 3M symbols. First M symbols in the 3M symbols are located in a data subfield A, middle M symbols are located in a data subfield B, and last M symbols are located in a data subfield C. A transmission suspension subfield (for example, a midamble), that is, a transmission suspension subfield 1 and a transmission suspension subfield 2 in FIG. 26, is set between every two data subfields. If the quiet period indication information indicates, in the data subfield B, that the quiet period occurs, and the designated location is a start location of a first transmission suspension subfield after the quiet period indication information, the transmission suspension subfield 2 may be no longer transmitted and replaced by the quiet period, and after the quiet period ends, the data subfield C and the PE subfield are transmitted.

In a second optional implementation, if the quiet period indication information indicating that the quiet period occurs is located between $M\times(K-1)+1$ symbols and $M\times K$ symbols, a field in which N symbols after the $M\times K$ symbols are located and that is in the data field is a quiet period subfield, M, N, and K are positive integers, M represents a designated quantity of intervals, and the designated location is a location in the quiet period subfield.

In a first optional example of the second optional implementation, the quiet period subfield is a subfield inserted into the data field. As shown in FIG. 27, a construction principle of the data field in the PPDU shown in FIG. 27 is the same as construction principles of the PPDUs shown in FIG. 13 and FIG. 16. It is assumed that the data field that is originally defined to be transmitted and that is in the PPDU includes data of 3M symbols and a PE subfield located after the data of the 3M symbols. First M symbols in the 3M symbols are located in a data subfield A, middle M symbols are located in a data subfield B, and last M symbols are located in a data subfield C. If the quiet period indication information indicates, in the data subfield B, that the quiet period occurs, and the designated location is an end location of a first transmission suspension subfield after the quiet period indication information, when the manner provided in the second optional example is used, the transmission suspension subfield is inserted after the data subfield B, the quiet period is generated at an end location of the subfield, and after the quiet period ends, the data subfield C and the PE subfield are transmitted.

In a second optional example of the second optional implementation, the quiet period subfield is an original subfield in the data field. As shown in FIG. 28, a construction principle of the data field in the PPDU shown in FIG. 28 is the same as construction principles in FIG. 14 and FIG. 17. It is assumed that content that is originally defined to be transmitted and that is in the PPDU is the same as content that is originally defined to be transmitted and that is in the PPDU in FIG. 27. When the manner provided in the second optional example is used, if the quiet period indication information indicates, in the data subfield B, that the quiet period occurs, and the designated location is a start location of the first transmission suspension subfield after the quiet period indication information, the quiet period is generated after the data subfield B, and after the quiet period ends, the data subfield C and the PE subfield are transmitted.

In a third optional implementation, if the quiet period indication information indicating that the quiet period occurs is located between $M\times(K-1)+1$ symbols and $M\times K$ symbols, the designated location is an end location of the $M\times K$ symbols.

A construction principle of the data field in the PPDU shown in FIG. 28 may alternatively be the same as construction principles of the PPDUs shown in FIG. 18 and FIG. 19. It is assumed that content that is originally defined to be transmitted and that is in the PPDU is the same as content that is originally defined to be transmitted and that is in the PPDU in FIG. 27. When the third optional implementation is used, the quiet period is generated after the data subfield B (that is, between M+1 symbols and 2M symbols), and after the quiet period ends, the data subfield C and the PE subfield are transmitted.

The PPDUs shown in FIG. 26 to FIG. 28 may indicate, by using a MAC method corresponding to the PPDUs shown in FIG. 7 and FIG. 8, that the quiet period occurs at the designated location, or may indicate, by using a physical method corresponding to the PPDU shown in FIG. 9, that the quiet period occurs at the designated location. Correspondingly, explanations for other fields in FIG. 26 to FIG. 28 may be the same as the explanations in FIG. 8 and FIG. 9 or may be adjusted based on the explanations in FIG. 8 and FIG. 9 based on an actual situation. Details are not described again in this embodiment of this application.

It should be noted that if the first optional implementation and the second optional implementation in this embodiment of this application are used for data transmission, and the quiet period occupies a time-frequency resource corresponding to a symbol of a transmission suspension subfield after the designated location, after the quiet period ends, the transmission suspension subfield may be transmitted in any one of the following manners.

In a first optional manner, after the quiet period ends, subfields, other than the quiet period, in the transmission suspension subfield may continue to be transmitted.

In a second optional manner, after the quiet period ends, the complete transmission suspension subfield continues to be transmitted.

In a third optional manner, after the quiet period ends, a subfield after the transmission suspension subfield is transmitted, that is, the transmission suspension subfield is no longer transmitted.

It should be noted that, to ensure data transmission reliability, if the transmission suspension subfield carries data that needs to be transmitted, the second optional manner is executed. If the transmission suspension subfield carries no data that needs to be transmitted, that is, a symbol in the transmission suspension subfield does not basically include actual data content, for example, a padding symbol, a PE, or an idle symbol, one of the foregoing three optional manners may be executed based on an actual situation.

In the data transmission method provided in this embodiment of this application, when the transmit end needs to stop transmission of the current PPDU, the transmit end can notify, by using the quiet period indication information, the receive end that the current PPDU generates the quiet period at the designated location, thereby improving data transmission flexibility. In a process in which the transmit end transmits a PPDU, when the transmit end needs to execute another service, the transmit end can suspend transmission of the current PPDU and execute the another service in the quiet period in a timely manner, thereby ensuring fast execution of the another service, and then can continue transmission of the current service. Further, reliability of the data transmission system is improved, and a throughput of the data transmission system is improved.

It should be noted that a sequence of steps of the data transmission methods provided in the embodiments of this application may be properly adjusted, and a step may be correspondingly added or removed based on a situation. Any variation method readily figured out by a person skilled in the art within the technical scope disclosed in this application shall fall within the protection scope of this application. Therefore, details are not described herein.

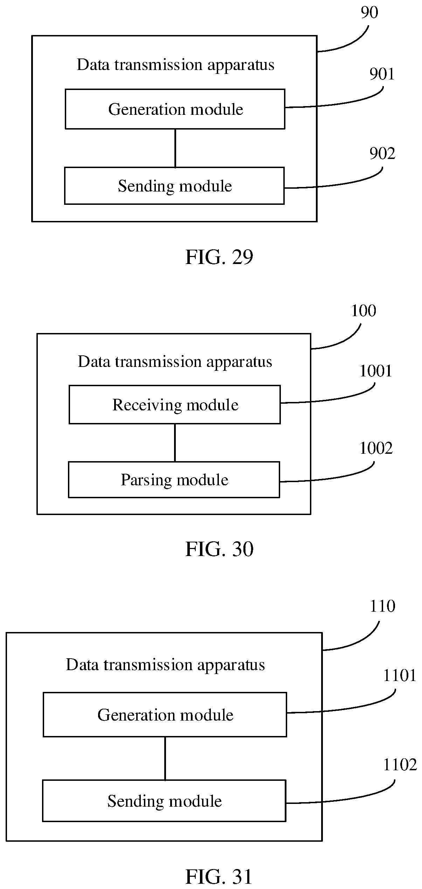

FIG. 29 is a schematic diagram of a structure of a data transmission apparatus according to an embodiment of this application. The data transmission apparatus may be used for the transmit end in FIG. 1. The data transmission apparatus 90 includes:

a generation module 901, configured to generate transmission suspension indication information, where the transmission suspension indication information is used to indicate whether transmission suspension occurs at a designated location after the transmission suspension indication information; and
a sending module 902, configured to send a PPDU, where the PPDU includes a preamble and a data field, and the data field carries the transmission suspension indication information.

FIG. 30 is a schematic diagram of a structure of another data transmission apparatus according to an embodiment of this application. The data transmission apparatus may be used for the receive end in FIG. 1. The data transmission apparatus 100 includes:

a receiving module 1001, configured to receive a PPDU, where the PPDU includes a preamble and a data field, the data field carries the transmission suspension indication information, and the transmission suspension indication information is used to indicate whether transmission suspension occurs at a designated location after the transmission suspension indication information; and
a parsing module 1002, configured to parse the PPDU based on the transmission suspension indication information.

In the embodiments of this application, the data transmission apparatus shown in FIG. 29 is used as an example to describe the modules in the data transmission apparatus used for the transmit end, and the data transmission apparatus shown in FIG. 30 is used as an example to describe the modules in the data transmission apparatus used for the receive end. It should be understood that, in the embodiments of this application, the data transmission apparatus used for the transmit end has any function of the transmit end in the data transmission method shown in FIG. 6, and the data transmission apparatus used for the receive end has any function of the receive end in the data transmission method shown in FIG. 6.

FIG. 31 is a schematic diagram of a structure of a data transmission apparatus according to another embodiment of this application. The data transmission apparatus may be used for the transmit end in FIG. 1. The data transmission apparatus 110 includes:

a generation module 1101, configured to generate transmission suspension indication information, where the transmission suspension indication information is used to indicate that transmission suspension occurs at a designated location after the transmission suspension indication information; and
a sending module 1102, configured to send a PPDU, where the PPDU includes a preamble and a data field, and the data field carries the transmission suspension indication information.

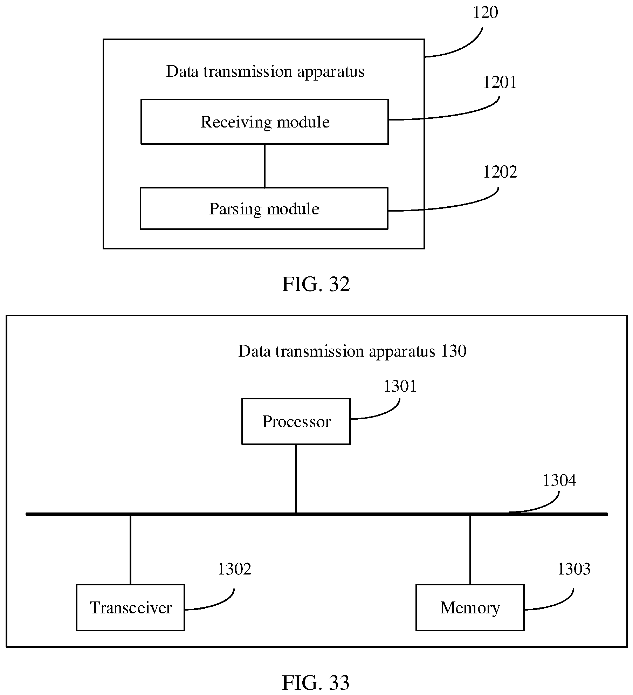

FIG. 32 is a schematic diagram of a structure of another data transmission apparatus according to another embodiment of this application. The data transmission apparatus may be used for the receive end in FIG. 1. The data transmission apparatus 120 includes:

a receiving module 1201, configured to receive a PPDU, where the PPDU includes a preamble and a data field, the data field carries transmission suspension indication information, and the transmission suspension indication information is used to indicate that transmission suspension occurs at a designated location after the transmission suspension indication information; and
a parsing module 1202, configured to parse the PPDU based on the preemption indication information.

In the embodiments of this application, the data transmission apparatus shown in FIG. 27 is used as an example to describe the modules in the data transmission apparatus used for the transmit end, and the data transmission apparatus shown in FIG. 28 is used as an example to describe the modules in the data transmission apparatus used for the receive end. It should be understood that, in the embodiments of this application, the data transmission apparatus used for the transmit end has any function of the transmit end in the data transmission method shown in FIG. 6, and the data transmission apparatus used for the receive end has any function of the receive end in the data transmission method shown in FIG. 6.

The data transmission apparatus (which is used for a transmit end or a receive end) provided in the embodiments of this application may be implemented in a plurality of product forms. For example, the data transmission apparatus may be configured as a general-purpose processing system. For example, the data transmission apparatus may be implemented by using a general bus architecture. For example, the data transmission apparatus may be implemented by using an application-specific integrated circuit (application-specific integrated circuit, ASIC). The following provides several possible product forms of the data transmission apparatus in the embodiments of this application. It should be understood that the following is merely an example, and the possible product forms in the embodiments of this application are not limited thereto.

As a possible product form, a data transmission apparatus 130 may be a device (for example, a base station, UE, or an AP) configured to transmit data. As shown in FIG. 33, the data transmission apparatus 130 may include a processor 1301 and a transceiver 1302. Optionally, the data transmission apparatus may further include a memory 1303. The processor 1301, the transceiver 1302, and the memory 1303 communicate with each other through internal connections. For example, the data transmission apparatus 130 may further include a bus 1304, and the processor 1301, the transceiver 1302, and the memory 1303 communicate with each other through the bus 1304. The processor 1301 is configured to perform processing steps in the method performed by the data transmission apparatus in the method shown in FIG. 6. For example, when the data transmission apparatus is used for the transmit end, the processing step may be step 801 in FIG. 6. When the data transmission apparatus is used for the receive end, the processing steps may be step 803, step 805, and step 807 in FIG. 4. The transceiver 1302 receives control from the processor 1301, and is configured to perform steps of sending and receiving a PPDU in the method performed by the data transmission apparatus in the method shown in FIG. 6. For example, when the data transmission apparatus is used for the transmit end, the sending and receiving steps may be step 602 and step 605 in FIG. 6. When the data transmission apparatus is used for the receive end, the sending and receiving steps may be steps of receiving the PPDU by the receive end. The memory 1303 is configured to store instructions. The instructions are invoked by the processor 1301, to perform processing steps in the method performed by the data transmission apparatus in the method shown in FIG. 6.

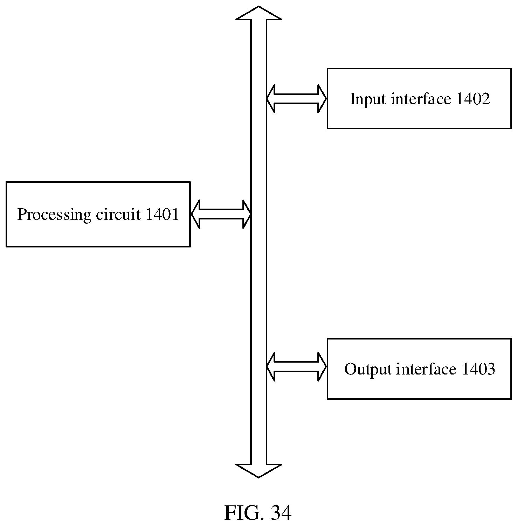

As another possible product form, the data transmission apparatus is alternatively implemented by a general-purpose processor, namely, a commonly known chip. As shown in FIG. 34, the data transmission apparatus may include a processing circuit 1401, an input interface 1402, and an output interface 1403, and the processing circuit 1401, the input interface 1402, and the output interface 1403 communicate with each other through internal connections. The input interface 1402 is configured to obtain information to be processed by the processing circuit 1401, the processing circuit 1401 is configured to perform the processing step (for example, step 801) performed by the transmit end in FIG. 6 to process the to-be-processed information, and the output interface 1403 is configured to output the information processed by the processing circuit 1401. Alternatively, the input interface 1402 is configured to obtain information (for example, the PPDU received by the receive end in the embodiment shown in FIG. 6) to be processed by the processing circuit 1401, the processing circuit 1401 is configured to perform the processing step (for example, step 603 and step 606) performed by the receive end in FIG. 6 to process the to-be-processed information, and the output interface 1403 is configured to output the information processed by the processing circuit.

Optionally, the data transmission apparatus may further include a transceiver (which is not shown in FIG. 34). When the processing circuit 1401 is configured to perform the processing step performed by the transmit end in FIG. 6 to process the to-be-processed information, the output interface 1403 is configured to output, to the transceiver, the information processed by the processing circuit 1401, and the transceiver is configured to send the information processed by the processing circuit 1401. When the processing circuit 1401 is configured to perform the processing step performed by the receive end in FIG. 6 to process the to-be-processed information, the transceiver is configured to: receive the information to be processed by the processing circuit 1401, and send the information to be processed by the processing circuit 1401 to the input interface 1402.

As still another possible product form, the data transmission apparatus may alternatively be implemented by using the following: a field-programmable gate array (Field-Programmable Gate Array, FPGA), a programmable logic device (Programmable Logic Device, PLD), a controller, a state machine, gate logic, a discrete hardware component, any other suitable circuit, or any combination of circuits that can perform various functions described in this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedures or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

The term "and/or" in this application describes only an association relationship for describing associated objects and indicates that three relationships may exist. For example, A and/or B may indicate the following three cases: Only A exists, both A and B exist, and only B exists. In addition, the symbol "/" in this specification generally represents an "or" relationship between associated objects.

The foregoing descriptions are merely optional embodiments of this application, but are not intended to limit this application. Any modification, equivalent replacement, improvement, or the like made without departing from the spirit and principle of this application shall fall within the protection scope of this application.

**Claims**

1. A data transmission method, wherein the method is used for a transmit end and comprises:

   generating transmission suspension indication information, wherein the transmission suspension indication information is used to indicate whether transmission suspension occurs at a designated location after the transmission suspension indication information; and
   sending a physical layer protocol data unit PPDU, wherein the PPDU comprises a preamble and a data field, and the data field carries the transmission suspension indication information.

2. A data transmission method, wherein the method is used for a receive end and comprises:

   receiving a PPDU, wherein the PPDU comprises a preamble and a data field, the data field carries transmission suspension indication information, and the transmission suspension indication information is used to indicate whether transmission suspension occurs at a designated location after the transmission suspension indication information; and
   parsing the PPDU based on the transmission suspension indication information.

3. The method according to claim 1 or 2, wherein a transmission suspension subfield is set every M symbols in the data field, M is a positive integer, and M represents a designated quantity of intervals; and
   the designated location is a location in the transmission suspension subfield.

4. The method according to claim 1 or 2, wherein if the transmission suspension indication information indicating that transmission suspension occurs is located between $M \times (K-1)+1$ symbols and $M \times K$ symbols, a field in which N symbols after the $M \times K$ symbols are located and that is in the data field is a transmission suspension subfield, M, N, and K are positive integers, M represents a designated quantity of intervals, and the designated location is a location in the transmission suspension subfield; or
   if the transmission suspension indication information indicating that transmission suspension occurs is located between $M \times (K-1)+1$ symbols and $M \times K$ symbols, the designated location is an end location of the $M \times K$ symbols, and M and K are positive integers.

5. The method according to claim 3 or 4, wherein the designated location is a start location of a first transmission suspension subfield after the transmission suspension indication information.

6. The method according to claim 3 or 4, wherein the preamble comprises first quantity indication information, and the first quantity indication information is used to indicate the designated quantity of intervals.

7. The method according to claim 3 or 4, wherein the preamble carries field indication information, and the field indication information is used to indicate that the PPDU comprises the transmission suspension subfield.

8. The method according to claim 7, wherein

the field indication information is located in a Doppler field of the preamble.

9. The method according to claim 3, wherein the transmission suspension subfield is a midamble subfield.

10. The method according to claim 9, wherein the midamble subfield comprises P extremely high throughput long training field EHT-LTF symbols, P is a positive integer, and a length of the EHT-LTF symbol of the midamble subfield is smaller than a length of an EHT-LTF symbol of the preamble; or
the midamble comprises a designated symbol, and a length of the designated symbol is smaller than a length of another symbol in the data field.

11. The method according to claim 10, wherein
the preamble comprises second quantity indication information, and the second quantity indication information is used to indicate a quantity of EHT-LTF symbols comprised in the midamble subfield.

12. The method according to any one of claims 1 to 11, wherein the preamble carries suspension warning information, and the suspension warning information is used to indicate whether there is a possibility of transmission suspension.

13. The method according to any one of claims 1 to 12, wherein the transmission suspension indication information is preemption indication information, and the preemption indication information is used to indicate whether a preemption mechanism occurs at the designated location; or
the transmission suspension indication information is quiet period indication information, the quiet period indication information is used to indicate whether a quiet period is generated at a designated location after the quiet period indication information, and the quiet period is a transmission suspension period of the PPDU.

14. A data transmission apparatus, wherein the apparatus is used for a transmit end and comprises:

   a generation module, configured to generate transmission suspension indication information, wherein the transmission suspension indication information is used to indicate whether transmission suspension occurs at a designated location after the transmission suspension indication information; and
   a sending module, configured to send a physical layer protocol data unit PPDU, wherein the PPDU comprises a preamble and a data field, and the data field carries the transmission suspension indication information.

15. A data transmission apparatus, wherein the apparatus is used for a receive end and comprises:

   a receiving module, configured to receive a PPDU, wherein the PPDU comprises a preamble and a data field, the data field carries transmission suspension indication information, and the transmission suspension indication information is used to indicate whether transmission suspension occurs at a designated location after the transmission suspension indication information; and
   a parsing module, configured to parse the PPDU based on the transmission suspension indication information.

16. The apparatus according to claim 14 or 15, wherein a transmission suspension subfield is set every M symbols in the data field, M is a positive integer, and M represents a designated quantity of intervals; and
the designated location is a location in the transmission suspension subfield.

17. The apparatus according to claim 14 or 15, wherein if the transmission suspension indication information indicating that transmission suspension occurs is located between $M \times (K-1)+1$ symbols and $M \times K$ symbols, a field in which N symbols after the $M \times K$ symbols are located and that is in the data field is a transmission suspension subfield, M, N, and K are positive integers, M represents a designated quantity of intervals, and the designated location is a location in the transmission suspension subfield; or
if the transmission suspension indication information indicating that transmission suspension occurs is located between $M \times (K-1)+1$ symbols and $M \times K$ symbols, the designated location is an end location of the $M \times K$ symbols, and M and K are positive integers.

18. The apparatus according to claim 16 or 17, wherein the designated location is a start location of a first transmission suspension subfield after the transmission suspension indication information.

19. The apparatus according to claim 16 or 17, wherein the preamble comprises first quantity indication information, and the first quantity indication information is used to indicate the designated quantity of intervals.

20. The apparatus according to claim 16 or 17, wherein the preamble carries field indication information, and the field indication information is used to indicate that the PPDU comprises the transmission suspension subfield.

21. The apparatus according to claim 20, wherein
the field indication information is located in a Doppler field of the preamble.

22. The apparatus according to claim 17, wherein the transmission suspension subfield is a midamble subfield.

23. The apparatus according to claim 22, wherein the midamble subfield comprises P extremely high throughput long training field EHT-LTF symbols, P is a positive integer, and a length of the EHT-LTF symbol of the midamble subfield is smaller than a length of an EHT-LTF symbol of the preamble; or
the midamble comprises a designated symbol, and a length of the designated symbol is smaller than a length of another symbol in the data field.

24. The apparatus according to claim 23, wherein
the preamble comprises second quantity indication information, and the second quantity indication information is used to indicate a quantity of EHT-LTF symbols comprised in the midamble subfield.

25. The apparatus according to any one of claims 14 to 24, wherein the preamble carries suspension warning information, and the suspension warning information is used to indicate whether there is a possibility of transmission suspension.

26. The apparatus according to any one of claims 14 to 25, wherein the transmission suspension indication information is preemption indication information, and the preemption indication information is used to indicate whether a preemption mechanism occurs at the designated location; or
the transmission suspension indication information is quiet period indication information, the quiet period indication information is used to indicate whether a quiet period is generated at a designated location after the quiet period indication information, and the quiet period is a transmission suspension period of the PPDU.

FIG. 1

| Frame control | Duration/ Identifier | Address 1 | Address 2 | Address 3 | Sequence control | Address 4 | Quality of service control | High throughput control | Frame body | FCS (frame check sequence) |
|---|---|---|---|---|---|---|---|---|---|---|

Frame header

FIG. 2

EP 4 013 170 A1

n A-MPDU subframes

| A-MPDU subframe 1 | A-MPDU subframe 2 | ... | A-MPDU subframe n | End of frame padding |
|---|---|---|---|---|

| MPDU delimiter | MPDU | Padding |
|---|---|---|

FIG. 3

| EOF (end of frame) | Reserved bit | MPDU length | CRC (cyclic redundancy code) | Delimiter signature |
|---|---|---|---|---|

FIG. 4

FIG. 5

EP 4 013 170 A1

Transmit end

601: Generate transmission suspension
indication information

602: Send a first PPDU carrying the
transmission suspension indication
information

Receive end

603: Parse the first PPDU based on the
transmission suspension indication information
after receiving the first PPDU

604: The transmit end sends a second
PPDU including an unsent A-MPDU
subframe

605: Parse the second PPDU after receiving
the second PPDU including the unsent A-
MPDU subframe

FIG. 6

FIG. 7

| Preamble | Data subfield A | Transmission suspension subfield 1 | Data subfield B | Transmission suspension subfield 2 | Data subfield C | PE |

M symbols    M symbols    M symbols

| ... | A-MPDU 5 Transmission suspension does not occur | A-MPDU 6 Transmission suspension does not occur | A-MPDU 7 Transmission suspension does not occur |

| A-MPDU 8 Transmission suspension does not occur | A-MPDU 9 Transmission suspension occurs | A-MPDU 10 Transmission suspension occurs | ... |

FIG. 8

| Preamble | Data subfield A | Transmission suspension subfield 1 | Data subfield B | Transmission suspension subfield 2 | Data subfield C | PE |

M symbols                    M symbols                    M symbols

| ... | Symbol 5 | Symbol 6 | Symbol 7 |

| Symbol 8 | Symbol 9 | Symbol 10 | ... |

Specific physical layer pattern symbol

FIG. 9

FIG. 10

| EHT-STF (optional) | EHT-LTF |
| --- | --- |

| Preamble | Data subfield A | Midamble 1 | Data subfield B | Midamble 2 | Data subfield C | PE |
| --- | --- | --- | --- | --- | --- | --- |

M symbols

M symbols

M symbols

| ... | Symbol 5 | Symbol 6 | Symbol 7 |
| --- | --- | --- | --- |

| Symbol 8 | Symbol 9 | Symbol 10 | ... |
| --- | --- | --- | --- |

Specific physical layer pattern symbol

FIG. 11

M symbols    M symbols    M symbols

| Preamble | Data subfield A | Data subfield B | Data subfield C | PE |
|---|---|---|---|---|

| ... | A-MPDU 5 Transmission suspension does not occur | A-MPDU 6 Transmission suspension does not occur | A-MPDU 7 Transmission suspension does not occur | A-MPDU 8 Transmission suspension does not occur | A-MPDU 9 Transmission suspension does not occur | A-MPDU 10 Transmission suspension does not occur | ... | A-MPDU 8 Transmission suspension does not occur | A-MPDU 9 Transmission suspension does not occur | A-MPDU 10 Transmission suspension does not occur | ... |

FIG. 12

M symbols    M symbols    N symbols    M symbols

| Preamble | Data subfield A | Data subfield B | Transmission suspension subfield | Data subfield C | PE |
|---|---|---|---|---|---|

| ... | Symbol 5 | Symbol 6 | Symbol 7 |
|---|---|---|---|

| Symbol 8 | Symbol 9 | Symbol 10 | ... |
|---|---|---|---|

Specific physical layer pattern symbol

FIG. 13

EP 4 013 170 A1

M symbols

N symbols

M symbols     M symbols

| Preamble | Data subfield A | Data subfield B | Data subfield C | PE |
|----------|-----------------|-----------------|-----------------|----|

| ... | A-MPDU 5 Transmission suspension does not occur | A-MPDU 6 Transmission suspension does not occur | A-MPDU 7 Transmission suspension does not occur |
|-----|-------------------------------------------------|-------------------------------------------------|-------------------------------------------------|

| A-MPDU 8 Transmission suspension does not occur | A-MPDU 9 Transmission suspension occurs | A-MPDU 10 Transmission suspension occurs | ... |
|-------------------------------------------------|-----------------------------------------|------------------------------------------|-----|

FIG. 14

|  | M symbols | M symbols | M symbols |  |
|---|---|---|---|---|
| Preamble | Data subfield A | Data subfield B | Data subfield C | PE |

| ... | Symbol 5 | Symbol 6 | Symbol 7 |
|---|---|---|---|

| Symbol 8 | Symbol 9 | Symbol 10 | ... |
|---|---|---|---|

| Symbol 8 | Symbol 9 | Symbol 10 | ... |
|---|---|---|---|

FIG. 15

| M symbols | M symbols | N symbols | M symbols |

| Preamble | Data subfield A | Data subfield B | Transmission suspension subfield | Data subfield C | PE |

| ... | Symbol 5 | Symbol 6 | Symbol 7 | | Symbol 8 | Symbol 9 | Symbol 10 | ... |

Specific physical layer pattern symbol

FIG. 16

EP 4 013 170 A1

M symbols

M symbols       M symbols       N symbols

| Preamble | Data subfield A | Data subfield B | Data subfield C | PE |

| ... | Symbol 5 | Symbol 6 | Symbol 7 |

| Symbol 8 | Symbol 9 | Symbol 10 | ... |

FIG. 17                    Specific physical layer pattern symbol

FIG. 18

Designated location

M symbols      M symbols      M symbols

| Preamble | Data subfield A | Data subfield B | Data subfield C | PE |
|----------|-----------------|-----------------|-----------------|----|

| ... | Symbol 5 | Symbol 6 | Symbol 7 |
|-----|----------|----------|----------|

| Symbol 8 | Symbol 9 | Symbol 10 | ... |
|----------|----------|-----------|-----|

Specific physical layer pattern symbol

FIG. 19

Data field

Preamble

| L-STF (legacy short training field) | L-LTF (legacy long training field) | L-SIG (legacy signal) | Symbol for auto-detection | EHT-SIG (extremely high throughput signal) | EHT-STF (extremely high throughput short training field) | EHT-LTF (extremely high throughput long training field) | Data subfield A | Data subfield B | PE |

FIG. 20

Transmit end

First receive end

Second receive end

701: Generate preemption indication information

702: Send a first PPDU

703: Parse the first PPDU based on the preemption indication information after receiving the first PPDU

704: Send a third PPDU

705: Parse the third PPDU after receiving the third PPDU

706: Send a second PPDU including an unsent A-MPDU subframe

707: Parse the second PPDU including the unsent A-MPDU subframe after receiving the second PPDU including the unsent A-MPDU subframe

FIG. 21

First PPDU

Second PPDU

| Preamble | Data subfield A | Data subfield B | | | Third PPDU | | | Preamble | Data subfield C | PE |
|---|---|---|---|---|---|---|---|---|---|---|

FIG. 22

| Transmit end | | First fragment of preemptable frame | | Second fragment of preemptable frame | | Third fragment of preemptable frame |
|---|---|---|---|---|---|---|
| Preemptable queue | | | | | | |
| | | | | | | |
| Express queue | | | | | | |

A preemption mechanism occurs

OFDMA /MU-MIMO

Express frame

FIG. 23

| Transmit end | | First fragment of preemptable frame | | | Second fragment and third fragment of preemptable frame |
|---|---|---|---|---|---|
| Preemptable queue | | | | | |
| | | | | | |
| Express queue | | | | | |

A preemption mechanism occurs

Express frame

FIG. 24

| Transmit end | | Receive end |
|---|---|---|

801: Generate quiet period
indication information

802: Send a first PPDU

803: Parse the first PPDU based on the quiet period
indication information after receiving the first
PPDU

804: Suspend transmission of the
first PPDU at a designated location

805: Send a first PPDU
including an unsent A-MPDU
subframe after a quiet period
ends

806: Parse the first PPDU after receiving the first PPDU
including the unsent A-MPDU subframe

FIG. 25

| M symbols | | | | | |
|---|---|---|---|---|---|

| Preamble | Data subfield A | Transmission suspension subfield 1 | Data subfield B | Transmissio n suspension subfield 2 | Data subfield C | PE |
|---|---|---|---|---|---|---|

M symbols    Quiet period    M symbols

Continue
transmission

FIG. 26

| M symbols    M symbols | | | | | M symbols | |
|---|---|---|---|---|---|---|

| Preamble | Data subfield A | Data subfield B | Transmission suspension subfield | Quiet period | Data subfield C | PE |
|---|---|---|---|---|---|---|

Continue
transmission

FIG. 27

| M symbols    M symbols    M symbols | | | | | |
|---|---|---|---|---|---|

| Preamble | Data subfield A | Data subfield B | Quiet period | Data subfield C | PE |
|---|---|---|---|---|---|

Continue
transmission

FIG. 28

90

Data transmission apparatus

Generation module — 901

Sending module — 902

FIG. 29

100

Data transmission apparatus

Receiving module — 1001

Parsing module — 1002

FIG. 30

110

Data transmission apparatus

Generation module — 1101

Sending module — 1102

FIG. 31

120

Data transmission apparatus

1201

Receiving module

1202

Parsing module

FIG. 32

Data transmission apparatus 130

1301

Processor

1304

1302

Transceiver

1303

Memory

FIG. 33

FIG. 34

## INTERNATIONAL SEARCH REPORT

| | International application No. |
|---|---|
| | **PCT/CN2020/105193** |

| | | |
|---|---|---|
| **A.** | **CLASSIFICATION OF SUBJECT MATTER** | |
| | H04W 72/12(2009.01)i | |
| | According to International Patent Classification (IPC) or to both national classification and IPC | |

| **B.** | **FIELDS SEARCHED** |
|---|---|
| Minimum documentation searched (classification system followed by classification symbols) |
| H04W H04Q H04L |
| Documentation searched other than minimum documentation to the extent that such documents are included in the fields searched |
| Electronic data base consulted during the international search (name of data base and, where practicable, search terms used) |
| CNPAT, WPI, EPODOC, CNKI, 3GPP: 物理层, 协议数据包, 暂停, 暂缓, 停止, 退避, 传输, 传送, 发送, 位置, 指示, MAC 帧, physical, PPDU, protocal data unit, pause, suspend, stop, backoff, back-off, transmit, send, position, indicate, MPDU |

| **C.** | **DOCUMENTS CONSIDERED TO BE RELEVANT** | |
|---|---|---|
| Category* | Citation of document, with indication, where appropriate, of the relevant passages | Relevant to claim No. |
| Y | CN 109314988 A (BEIJING XIAOMI MOBILE SOFTWARE CO., LTD.) 05 February 2019 (2019-02-05) description, paragraphs 0094-0113 | 1-26 |
| Y | CN 109644402 A (HUAWEI TECHNOLOGIES CO., LTD.) 16 April 2019 (2019-04-16) description, paragraphs 0006-0011 | 1-26 |
| A | CN 102025617 A (ZTE CORPORATION) 20 April 2011 (2011-04-20) entire document | 1-26 |
| A | CN 104584649 A (QUALCOMM INC.) 29 April 2015 (2015-04-29) entire document | 1-26 |
| A | US 2015271085 A1 (FUJITSU TELECOM NETWORKS LIMITED et al.) 24 September 2015 (2015-09-24) entire document | 1-26 |
| A | INTEL CORPORATION. ""Channel access mechanism for NR-unlicensed"" *3GPP TSG RAN WG1 Meeting #97 R1-1906785*, 04 May 2019 (2019-05-04), entire document | 1-26 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 August 2020** | **01 September 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/105193**

| Patent document cited in search report | | | Publication date (day/month/year) | Patent family member(s) | | | Publication date (day/month/year) |
|---|---|---|---|---|---|---|---|
| CN | 109314988 | A | 05 February 2019 | WO | 2020056773 | A1 | 26 March 2020 |
| CN | 109644402 | A | 16 April 2019 | JP | 2019533343 | A | 14 November 2019 |
| | | | | EP | 3504910 | A1 | 03 July 2019 |
| | | | | US | 2018077641 | A1 | 15 March 2018 |
| | | | | WO | 2018045885 | A1 | 15 March 2018 |
| | | | | KR | 20190049821 | A | 09 May 2019 |
| CN | 102025617 | A | 20 April 2011 | WO | 2012068864 | A1 | 31 May 2012 |
| CN | 104584649 | A | 29 April 2015 | WO | 2014028247 | A1 | 20 February 2014 |
| | | | | US | 2014050133 | A1 | 20 February 2014 |
| | | | | KR | 20150044921 | A | 27 April 2015 |
| | | | | EP | 2885947 | A1 | 24 June 2015 |
| | | | | JP | 2015529412 | A | 05 October 2015 |
| US | 2015271085 | A1 | 24 September 2015 | JP | 2015185909 | A | 22 October 2015 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910785807